(19) Europäisches Patentamt / European Patent Office / Office européen des brevets

(11) **EP 3 742 691 B1**

(12) **EUROPEAN PATENT SPECIFICATION**

(45) Date of publication and mention
of the grant of the patent:
**02.03.2022  Bulletin 2022/09**

(21) Application number: **18906845.5**

(22) Date of filing: **21.02.2018**

(51) International Patent Classification (IPC):
*H04L 27/22* (2006.01)   *H04B 17/309* (2015.01)
*H04B 7/022* (2017.01)   *H04B 7/06* (2006.01)
*H04B 7/08* (2006.01)   *H04L 7/04* (2006.01)
*H04L 25/02* (2006.01)   *H04J 11/00* (2006.01)
*H04B 1/10* (2006.01)

(52) Cooperative Patent Classification (CPC):
**H04B 1/1027; H04B 7/022; H04B 7/06; H04B 7/08;
H04B 17/309; H04J 11/005; H04L 7/042;
H04L 25/0204; H04L 25/0222; H04L 25/0224;
H04L 27/22**

(86) International application number:
**PCT/JP2018/006315**

(87) International publication number:
**WO 2019/163037 (29.08.2019 Gazette 2019/35)**

(54) **WIRELESS COMMUNICATION SYSTEM AND WIRELESS COMMUNICATION METHOD**

DRAHTLOSKOMMUNIKATIONSSYSTEM UND DRAHTLOSKOMMUNIKATIONSVERFAHREN

SYSTÈME ET PROCÉDÉ DE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.11.2020  Bulletin 2020/48**

(73) Proprietor: **Mitsubishi Electric Corporation
Tokyo 100-8310 (JP)**

(72) Inventors:
• **SASAKI, Satoshi
Tokyo 100-8310 (JP)**
• **NAKAJIMA, Akinori
Tokyo 100-8310 (JP)**

• **MASUDA, Shinji
Tokyo 100-8310 (JP)**
• **SANO, Hiroyasu
Tokyo 100-8310 (JP)**

(74) Representative: **Pfenning, Meinig & Partner mbB
Patent- und Rechtsanwälte
Theresienhöhe 11a
80339 München (DE)**

(56) References cited:
EP-A1- 2 634 923        WO-A1-2011/093095
WO-A1-2014/089096    JP-A- 2002 217 783
JP-A- 2009 296 514     JP-A- 2012 089 967
JP-A- 2015 082 773     KR-A- 20020 031 693
US-A1- 2008 130 803

**Description**

Field

The present invention relates to a wireless communication system and a wireless communication method that allow a plurality of transmission devices to communicate with a reception device using the same frequency.

Background

In a wireless communication system including a plurality of base stations, the same frequency is used by a plurality of base stations for effective use of frequencies. In order for a plurality of base stations to use the same frequency, the base stations using the same frequency are spaced apart from each other so as not to interfere with each other. However, a mobile station that receives a transmission signal from some base station may experience co-channel interference, i.e. a phenomenon in which a transmission signal from another base station using the same frequency interferes, depending on geographical conditions, the position of the mobile station, and the like.

Patent Literature 1 discloses a method of removing an interference signal included in a reception signal by multiplying each of a plurality of reception signals received using a plurality of antennas by a weight for adjusting amplitude, phase, and the like and then combining the plurality of reception signals. With the method disclosed in Patent Literature 1, after a first weight is calculated based on a reception signal, a second weight is calculated using the first weight serving as an initial value. The process of calculating the second weight is repeatedly performed so that the weight is optimized.

The method of weight calculation disclosed in Patent Literature 1 is a blind-type weight calculation algorithm. Another example of a method of weight calculation is a weight calculation algorithm using a known sequence. In a case where the weight calculation algorithm using a known sequence is used, when an interference signal is generated using channel estimation for extracting an interference signal from a reception signal, the optimization processing described in Patent Literature 1 is not needed.

EP 2 634 923 A1 discloses a receiver comprises an input for an incoming signal, the incoming signal possibly comprising a wanted signal and one or more interference signals. The receiver further comprises a signal source for providing a predetermined signal that is substantially identical to at least a portion of at least one interference signal of the one or more interference signals. The receiver also comprises a signal analyzer for analyzing the incoming signal regarding at least one known signal component of at least one of the one or more interference signals to obtain at least one interference signal parameter. A cancellation signal generator (146) generates a cancellation signal on the basis of the at least one interference signal parameter.

Citation List

Patent Literature

Patent Literature 1: Japanese Patent No. 6166641 Summary

Technical Problem

However, the above-described conventional technique of generating an interference signal using channel estimation is problematic because when the mobile station moves at high speed, the accuracy of channel estimation decreases, the accuracy of interference signal extraction decreases, and the interference removal performance decreases.

The present invention has been made in view of the above, and an object thereof is to obtain a wireless communication system capable of improving the interference removal performance.

Solution to Problem

The present invention is set out in the appended set of claims. In order to solve the above-described problem and achieve the object, a wireless communication system according to claim 1 is provided.

Advantageous Effects of Invention

The wireless communication system and the wireless communication method according to the present invention can achieve the effect of improving the interference removal performance.

Brief Description of Drawings

FIG. 1 is a diagram illustrating a configuration of a wireless communication system according to a first embodiment of the present invention.

FIG. 2 is a diagram illustrating a format of transmission signals from the base stations illustrated in FIG. 1.

FIG. 3 is a diagram illustrating a configuration of a base station according to the first embodiment of the present invention.

FIG. 4 is a diagram illustrating an arrangement of QPSK modulation symbols used in the first embodiment of the present invention.

FIG. 5 is a diagram illustrating a configuration of a mobile station according to the first embodiment of the present invention.

FIG. 6 is a diagram illustrating a configuration of a wireless communication system according to a modification of the first embodiment of the present invention.

FIG. 7 is a diagram illustrating a configuration of a wireless communication system according to a second embodiment of the present invention.

FIG. 8 is a diagram illustrating a configuration of a base station according to the second embodiment of the present invention.

FIG. 9 is a diagram illustrating a configuration of a mobile station according to the second embodiment of the present invention.

FIG. 10 is a diagram illustrating a configuration of a wireless communication system according to a third embodiment of the present invention.

FIG. 11 is a diagram illustrating a format of transmission signals from base stations according to the third embodiment of the present invention.

FIG. 12 is a diagram illustrating a configuration of a base station according to the third embodiment of the present invention.

FIG. 13 is a diagram illustrating a configuration of a mobile station according to the third embodiment of the present invention.

FIG. 14 is a diagram illustrating a configuration of a mobile station according to a fourth embodiment of the present invention.

FIG. 15 is a diagram illustrating a configuration of a mobile station according to a fifth embodiment which is the claimed embodiment.

FIG. 16 is a diagram illustrating a configuration of a mobile station according to a sixth embodiment of the present invention.

FIG. 17 is a diagram illustrating a configuration of a wireless communication system according to a seventh embodiment of the present invention.

FIG. 18 is a diagram illustrating an example in which the processing circuit of the base stations and the mobile stations according to the first to seventh embodiments of the present invention is configured with dedicated hardware.

FIG. 19 is a diagram illustrating an example in which the processing circuit of the base stations and the mobile stations according to the first to seventh embodiments of the present invention is configured with a processor and a memory.

Description of Embodiments

Hereinafter, a wireless communication system and a wireless communication method according to embodiments of the present invention will be described in detail with reference to the drawings. The present invention is not limited to the embodiments.

In the following description, an estimation value of a specific parameter is represented in a sentence by a sign denoting the parameter and (hat) following the sign, and represented in a formula by the sign and a hat symbol on the sign.

First Embodiment.

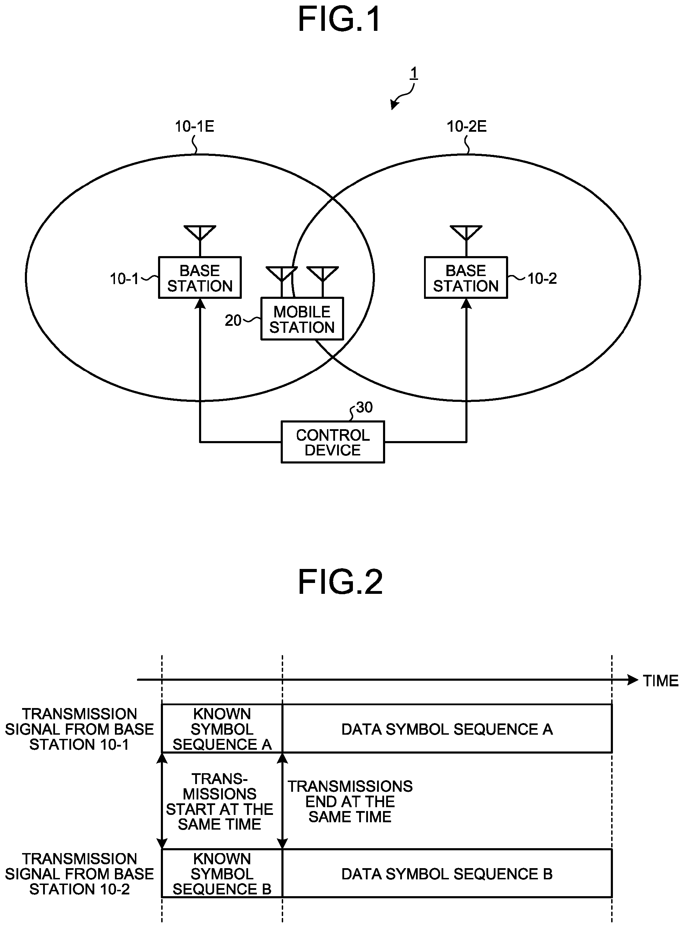

FIG. 1 is a diagram illustrating a configuration of a wireless communication system 1 according to the first embodiment of the present invention. The wireless communication system 1 includes a base station 10-1, a base station 10-2, a mobile station 20, and a control device 30. Hereinafter, when it is not necessary to distinguish between the base station 10-1 and the base station 10-2, they are simply referred to as the base station 10. The wireless communication system 1 improves the accuracy of channel estimation by using an average time parameter that is based on the moving speed of the mobile station 20.

Although FIG. 1 illustrates two base stations 10 and one mobile station 20 for simplicity, the configuration of the present embodiment is not limited to this example. The wireless communication system 1 may include three or more base stations 10 and may include two or more mobile stations 20.

The base station 10-1 forms a communication area 10-1E and can communicate with the mobile station 20 present in the communication area 10-1E. The base station 10-2 forms a communication area 10-2E and can communicate with the mobile station 20 present in the communication area 10-2E. The transmission frequencies of the base station 10-1 and the base station 10-2 are the same, and the communication area 10-1E of the base station 10-1 and the communication area 10-2E of the base station 10-2 partially overlap.

The control device 30 transmits, to the base station 10-1 and the base station 10-2, information to be wirelessly transmitted and control information for the base station 10-1 and the base station 10-2. Each of the base station 10-1 and the base station 10-2 transmits a transmission bit sequence, i.e. information received from the control device 30, using a wireless signal. The mobile station 20 receives a signal from the base station 10-1 or the base station 10-2.

In the state illustrated in FIG. 1, the mobile station 20 is located at a point where the communication area 10-1E of the base station 10-1 and the communication area 10-2E of the base station 10-2 overlap. Therefore, a reception signal at the mobile station 20 is a signal in which a transmission signal from the base station 10-1 and a transmission signal from the base station 10-2 are combined. When the mobile station 20 receives a transmission signal from one base station 10, a transmission signal from the other base station 10 causes co-channel interference. In order to remove co-channel interference, the mobile station 20 performs interference removal processing. For example, in a case where the mobile station 20 wants to receive a transmission signal from the base station 10-1, that is, in a case where the transmission signal from the base station 10-1 is a target signal, the transmission signal from the base station 10-2 is an interference signal, i.e. co-channel interference source. Therefore, the mobile station 20 removes the transmission signal from the base station 10-2.

The base station 10-1 and the base station 10-2 have the function of transmission devices that transmit signals including different known sequences using the same frequency. Known sequences are known symbol sequences represented in complex notation, and differ between the base stations 10. For example, the known sequence that the base station 10-1 inserts into a transmission signal is different from the known sequence that the base station 10-2 inserts into a transmission signal.

FIG. 2 is a diagram illustrating a format of transmission signals from the base stations 10-1 and 10-2 illustrated in FIG. 1. The transmission signal from the base station 10-1 includes a known symbol sequence A and a data symbol sequence A. The transmission signal from the base station 10-2 includes a known symbol sequence B and a data symbol sequence B. Further, the base station 10-1 and the base station 10-2 transmit the transmission signals in synchronization. The length of the known symbol sequence A used by the base station 10-1 is the same as the length of the known symbol sequence B used by the base station 10-2. The position where the base station 10-1 inserts the known symbol sequence A into the transmission signal is the same as the position where the base station 10-2 inserts the known symbol sequence B into the transmission signal. Consequently, the transmission of the known symbol sequence A inserted into the transmission signal from the base station 10-1 and the transmission of the known symbol sequence B inserted into the transmission signal from the base station 10-2 can be timed to coincide. Therefore, the transmission of the known symbol sequence A and the transmission of the known symbol sequence B start at the same time and also end at the same time.

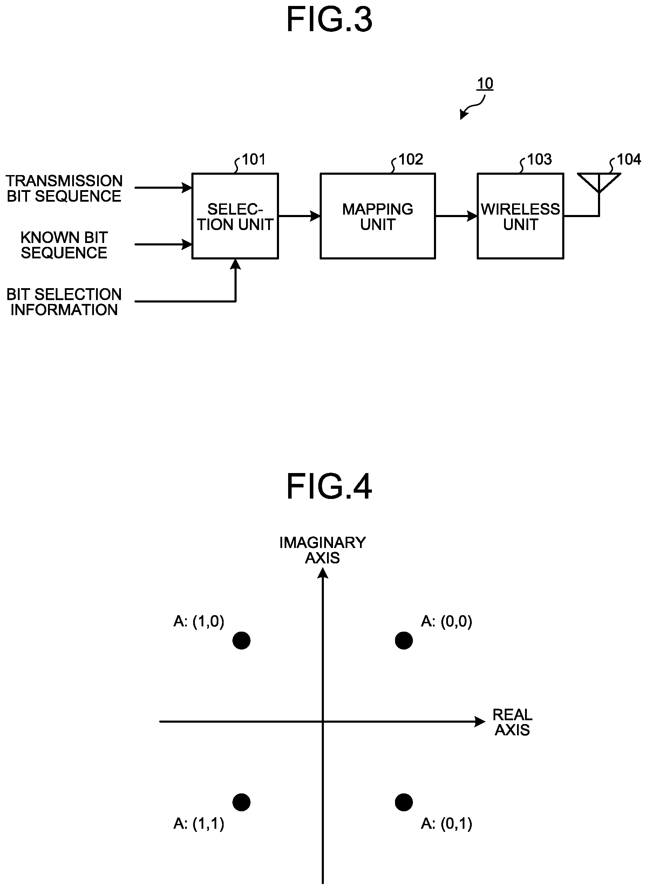

FIG. 3 is a diagram illustrating a configuration of the base station 10 according to the first embodiment of the present invention. In the present embodiment, the base station 10 has the function of a transmission device that transmits a transmission signal illustrated in FIG. 2. The base station 10 includes a selection unit 101, a mapping unit 102, a wireless unit 103, and an antenna 104.

The selection unit 101 receives a transmission bit sequence, a known bit sequence, and bit selection information from the control device 30. The selection unit 101 selects either the transmission bit sequence or the known bit sequence according to the bit selection information, and outputs the selected bit sequence to the mapping unit 102. Although a known bit sequence is input from the control device 30 in this example, a memory may be provided inside the base station 10 so that a plurality of known bit sequences can be stored in advance. In this case, the selection unit 101 reads a known bit sequence from the memory according to an instruction from the control device 30.

The mapping unit 102 maps the bit sequence output from the selection unit 101 as a transmission symbol sequence on the complex plane. The mapping unit 102 outputs the mapped transmission symbol sequence to the wireless unit 103.

The mapping scheme used by the mapping unit 102 can be, for example, quadrature phase shift keying (QPSK). FIG. 4 is a diagram illustrating an arrangement of QPSK modulation symbols used in the first embodiment of the present invention. QPSK is a scheme for mapping two transmission bits to one symbol, which enables the transmission of quaternary information of "0, 0" "0, 1" "1, 0", and "1, 1" in one modulation.

Note that the modulation scheme used in the first embodiment is not limited to QPSK. In a case where the bit sequence output from the selection unit 101 is a known bit sequence, the output from the mapping unit 102 is a known symbol sequence. In a case where a known bit sequence A is input to the mapping unit 102, the mapping unit 102 outputs the known symbol sequence A. In a case where a known bit sequence B is input to the mapping unit 102, the mapping unit 102 outputs the known symbol sequence B.

In the example illustrated in FIG. 3, a known bit sequence is input from the control device 30 and a known symbol sequence is generated by the mapping unit 102, but the present embodiment is not limited to this example. The control device 30 may input a known symbol sequence to the base station 10. In this case, the process of mapping a known bit sequence by the mapping unit 102 is omitted.

The wireless unit 103 performs, on the transmission symbol sequence input from the mapping unit 102, transmission processing such as waveform shaping, digital-analog (DA) conversion, up-conversion, and amplification processing, and outputs the resultant transmission signal to the mobile station 20 via the antenna 104.

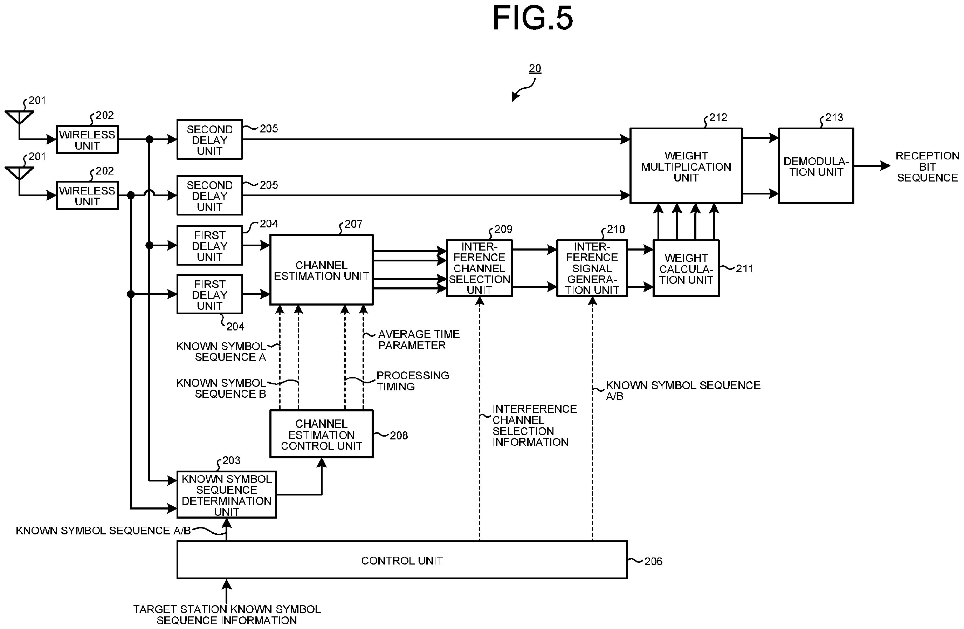

FIG. 5 is a diagram illustrating a configuration of the mobile station 20 according to the first embodiment of the present invention. The mobile station 20 has the function of a reception device that receives a signal from at least one of a plurality of base stations 10 each including a transmission device. The mobile station 20 includes an antenna 201, a wireless unit 202, a known symbol sequence determination unit 203, a first delay unit 204, a second delay unit 205, a control unit 206, a channel estimation unit 207, a channel estimation control unit 208, an interference channel selection unit 209, an interference signal generation unit 210, a weight calculation unit 211, a weight multiplication unit 212, and a demodulation unit 213.

The wireless unit 202 performs, on the reception signal received via the antenna 201, reception processing such as amplification, down-conversion, analog-digital conversion, and waveform shaping to convert the reception signal into a reception symbol sequence represented in complex notation. The wireless unit 202 outputs the generated reception symbol sequence to the known symbol sequence determination unit 203, the first delay unit 204, and the second delay unit 205. Note that the number of wireless units 202, first delay units 204, and second delay units 205 is the same as the number of antennas 201, and each wireless unit 202 is connected to one of the plurality of antennas 201 and one of the plurality of first delay units 204. Each of the plurality of wireless units 202 processes the reception signal input from the corresponding antenna 201, and then outputs the obtained reception symbol sequence to the one first delay unit 204 corresponding to the wireless unit 202.

The known symbol sequence determination unit 203 calculates the correlation between the known symbol sequence A or the known symbol sequence B input from the control unit 206 and the reception symbol sequence input from the wireless unit 202, and detects the position of the known symbol sequence inserted into the reception symbol sequence. For example, in a case where the known symbol sequence inserted into the target signal is the known symbol sequence A, the known symbol sequence determination unit 203 calculates the correlation between the reception symbol sequence and the known symbol sequence A, and outputs the timing of the maximum correlation to the channel estimation control unit 208.

The first delay unit 204 delays the reception symbol sequence input from the wireless unit 202 by the time required for the known symbol sequence determination unit 203 to finish the processing. Such a configuration enables the channel estimation unit 207 to perform channel estimation on the known symbol sequence of the reception symbol sequence at the processing timing output from the channel estimation control unit 208.

The second delay unit 205 delays the reception symbol sequence input from the wireless unit 202 by the time required for the channel estimation unit 207, the interference channel selection unit 209, and the interference signal generation unit 210 to process the reception symbol sequence output from the first delay unit 204 and for the weight calculation unit 211 to finish weight calculation processing. Such a configuration enables the weight multiplication unit 212 to multiply the weight for interference removal from the head of the known symbol sequence inserted into the reception symbol sequence.

The control unit 206 outputs the known symbol sequence A or the known symbol sequence B to the known symbol sequence determination unit 203 and the interference signal generation unit 210 based on target station known symbol sequence information input from outside. The target station known symbol sequence information indicates the known symbol sequence inserted into the target signal. For example, in a case where the target station known symbol sequence information input from outside indicates that the known symbol sequence inserted into the target signal is the known symbol sequence A, the known symbol sequence A, which is the known symbol sequence inserted into the target signal, is output to the known symbol sequence determination unit 203, and the known symbol sequence B, which is the known symbol sequence inserted into the interference signal, not into the target signal, is output to the interference signal generation unit 210.

Based on the target station known symbol sequence information, the control unit 206 generates interference channel selection information for selecting one of a plurality of channel coefficients output from the channel estimation unit 207, and outputs the interference channel selection information to the interference channel selection unit 209. For example, in a case where the control unit 206 identifies the known symbol sequence inserted into the target signal as the known symbol sequence A based on the target station known symbol sequence information, the control unit 206 generates interference channel selection information for selecting a channel coefficient between the mobile station 20 and the base station 10 that has transmitted the known symbol sequence B, which is the known symbol sequence inserted into the interference signal, not into the target signal.

The channel estimation unit 207 uses the reception symbol sequence input from the first delay unit 204 and the known symbol sequence input from the channel estimation control unit 208 to perform channel estimation at the processing timing input from the channel estimation control unit 208. The number of channel coefficients obtained by the channel estimation unit 207 is the square of the number of reception symbol sequences input to the channel estimation unit 207, and is four in the example illustrated in FIG. 5.

Let $y_m[t]$ denote the reception symbol sequence input from the first delay unit 204 to the channel estimation unit 207. Here, "m" is a reception antenna number, and when the number of reception antennas is two, m=0 and 1 is satisfied. In addition, "t" represents a reception symbol number, and the reception symbol number output from the first delay unit 204 at the input processing timing is denoted by $t_0$. Let $s_0[k]$ denote the known symbol sequence A, and let $s_1[k]$ denote the known symbol sequence B. Here, "k" is a known symbol number, and k=0, 1, ..., and K-1 is satisfied. "K" is a known symbol sequence length. Let $h_m[t]$ denote the channel coefficient between the base station 10 that has transmitted the known symbol sequence A and the mobile station 20, and let $g_m[t]$ denote the channel coefficient between the base station 10 that has transmitted the known symbol sequence B and the mobile station 20. Let $n_m[t]$ denote the noise at each antenna 201. Then, the reception symbol sequence $y_m[t]$ is expressed by Formula (1) below using hm[t], $g_m[t]$, $s_0[k]$, $s_1[k]$, and $n_m[t]$.

$$y_m[t_0 + k] = \begin{bmatrix} s_0[k] & s_1[k] \end{bmatrix} \begin{bmatrix} h_m[t_0 + k] \\ g_m[t_0 + k] \end{bmatrix} + n_m[t_0 + k] \qquad \ldots (1)$$

The channel estimation unit 207 calculates an estimation value h(hat)$_m$[t] of the channel coefficient h$_m$[t] between the base station 10 that has transmitted the known symbol sequence A and the mobile station 20, and an estimation value g(hat)$_m$[t] of the channel coefficient g$_m$[t] between the base station 10 that has transmitted the known symbol sequence B and the mobile station 20. For example, let us assume that the temporal fluctuation in the channel coefficients h$_m$[t] and g$_m$[t] for 2L+1 reception symbols $y_m[t_0+k-L]$ to $y_m[t_0+k+L]$ in the range of t=$t_0$+k-L to t=$t_0$+k+L can be ignored, that is, Formula (2) and Formula (3) below hold. In this case, the reception symbols $y_m[t_0+k-L]$ to $y_m[t_0+k+L]$ are expressed by Formula (4) below.

$$h_m[t_0+k-L]=h_m[t_0+k+1-L]=\ldots=h_m[t_0+k+L] \quad \ldots \quad (2)$$

$$g_m[t_0+k-L]=g_m[t_0+k+1-L]=\ldots=g_m[t_0+k+L] \quad \ldots \quad (3)$$

$$\begin{bmatrix} y_m[t_0 + k - L] \\ \vdots \\ y_m[t_0 + k] \\ \vdots \\ y_m[t_0 + k + L] \end{bmatrix} = \begin{bmatrix} s_0[k - L] & s_1[k - L] \\ \vdots & \vdots \\ s_0[k] & s_1[k] \\ \vdots & \vdots \\ s_0[k + L] & s_1[k + L] \end{bmatrix} \begin{bmatrix} h_m[t_0 + k] \\ g_m[t_0 + k] \end{bmatrix} + \begin{bmatrix} n_m[t_0 + k - L] \\ \vdots \\ n_m[t_0 + k] \\ \vdots \\ n_m[t_0 + k + L] \end{bmatrix} \ldots$$

$$(4)$$

The reception symbol vector $Y_m[k]$, which is a vector represented by the reception symbol sequence $y_m[t]$, is expressed by Formula (5) below.

$$Y_m[k] = \begin{bmatrix} y_m[t_0 + k - L] \\ \vdots \\ y_m[t_0 + k] \\ \vdots \\ y_m[t_0 + k + L] \end{bmatrix} \quad \ldots (5)$$

The known symbol matrix S[k], which is a matrix represented by the known symbol sequence As₀[k] and the known symbol sequence $s_1[k]$, is expressed by Formula (6) below.

$$S[k] = \begin{bmatrix} s_0[k-L] & s_1[k-L] \\ \vdots & \vdots \\ s_0[k] & s_1[k] \\ \vdots & \vdots \\ s_0[k+L] & s_1[k+L] \end{bmatrix} \quad \ldots (6)$$

The channel coefficient vector Hm[k], which is a vector represented by the channel coefficient $h_m[t]$ and the channel coefficient $g_m[t]$, is expressed by Formula (7) below.

$$H_m[k] = \begin{bmatrix} h_m[t_0 + k] \\ g_m[t_0 + k] \end{bmatrix} \quad \ldots (7)$$

The noise vector $N_m[k]$, which is a vector represented by the noise $n_m[t]$, is expressed by Formula (8) below.

$$N_m[k] = \begin{bmatrix} n_m[t_0 + k - L] \\ \vdots \\ n_m[t_0 + k] \\ \vdots \\ n_m[t_0 + k + L] \end{bmatrix} \quad \ldots (8)$$

Using Formulas (5) to (8) above, Formula (4) is expressed by Formula (9) below.

$$Ym[k] = S[k]H_m[k] + N_m[k] \quad \ldots \quad (9)$$

Further, from Formula (9), $H_m[k]$ is expressed by Formula (10) below.

$$H_m[k] = (S^H[k]S[k])^{-1}S^H[k](Y_m[k] - N_m[k]) \quad \ldots \quad (10)$$

Here, $S^H[k]$ is a conjugate complex transpose matrix of S[k]. The estimation value H(hat)ₘ[k] of $H_m[k]$ is expressed by Formula (11) below using h(hat)ₘ[k] and g(hat)ₘ[k].

$$\hat{H}_m[k] = \begin{bmatrix} \hat{h}_m[t_0 + k] \\ \hat{g}_m[t_0 + k] \end{bmatrix} \quad \dots (11)$$

With the noise vector $N_m[k]$ in Formula (10) ignored, H(hat)$_m$[k] is expressed by Formula (12) below. Here, H(hat)$_m$[k] is represented using $Y_m[k]$ and S[k]. Therefore, h(hat)$_m$[k] and g(hat)$_m$[k] are obtained.

$$\hat{H}_m[k] = (S^H[k]S[k])^{-1} S^H[k] Y_m[k] \quad \dots (12)$$

Here, suppose that the mobile station 20 moves at high speed. In this case, the temporal fluctuation in channel coefficients in the range of $t=t_0+k-L$ to $t=t_0+k+L$ is large, and assuming that there is no temporal fluctuation in channel coefficients in the range of $t=t_0+k-L$ to $t=t_0+k+L$ as described above, the accuracy of channel coefficient estimation decreases. Therefore, the accuracy of channel estimation during high-speed movement is improved by reducing the value of L as the moving speed increases.

In the case of k<L or k≥K-L, H(hat)$_m$[k] cannot be obtained by Formula (12) above. For this reason, in the case of k<L, H(hat)$_m$[k] may be the value of H(hat)m[L], or may be obtained by changing the value of L to a value that satisfies k≥L.

Let us now return to FIG. 5. The channel estimation control unit 208 generates a processing timing based on the position information of the known symbol sequence in the reception symbol sequence input from the known symbol sequence determination unit 203. The channel estimation control unit 208 outputs the generated processing timing, the known symbol sequence A, the known symbol sequence B, and the average time parameter to the channel estimation unit 207. The average time parameter is a parameter related to the estimation accuracy of channel estimation. For example, for performing channel estimation using Formula (12) above, the channel estimation control unit 208 outputs a parameter L as the average time parameter to the channel estimation unit 207, the parameter L indicating the range of reception symbols on the time axis to be used for obtaining channel coefficients. The average time parameter is a value that depends on the moving speed of the mobile station 20, and is determined based on, for example, the average moving speed of the mobile station 20 in the system. Note that channel estimation may be performed using a least mean square (LMS) algorithm, a normalized LMS (NLMS) algorithm, a recursive least square (RLS) algorithm, or the like, instead of using Formula (12) above. The average time parameter for the LMS algorithm and the NLMS algorithm is the step size, and the average time parameter for the RLS algorithm is the forgetting factor.

The interference channel selection unit 209 selects a channel coefficient for the interference signal from among a plurality of estimation values of channel coefficients output from the channel estimation unit 207. Hereinafter, estimation values of channel coefficients are referred to as channel estimation values. For example, in a case where h(hat)$_m$[t] and g(hat)$_m$[t] obtained using Formula (12) are input from the channel estimation unit 207, and the interference channel selection information input from the control unit 206 indicates that a channel coefficient for the known symbol sequence B is to be selected, the interference channel selection unit 209 selects g(hat)$_m$[t] and outputs the selected g(hat)$_m$[t] to the interference signal generation unit 210.

The interference signal generation unit 210 generates an interference signal sequence using the known symbol sequence input from the control unit 206 and the channel coefficient input from the interference channel selection unit 209. For example, in a case where the known symbol sequence input from the control unit 206 is the known symbol sequence B, and the channel coefficient input from the interference channel selection unit 209 is g(hat)m[t], the interference signal sequence $ri_m[k]$ can be calculated using Formula (13) below. The interference signal generation unit 210 outputs the generated interference signal sequence to the weight calculation unit 211.

$$ri_m[k] = s_1[k]\hat{g}_m[t_0 + k] \quad \dots (13)$$

The weight calculation unit 211 generates an interference removal weight using the interference signal sequence $ri_m[k]$ input from the interference signal generation unit 210. For example, interference removal weights $w_{00}$, $w_{01}$, $w_{10}$, and $w_{11}$ for achieving whitening are generated. The weight calculation unit 211 outputs the generated interference removal weights to the weight multiplication unit 212.

The weight multiplication unit 212 performs interference removal processing using the interference removal weights output from the weight calculation unit 211, and outputs the interference-free reception symbol sequence to the demodulation unit 213. For example, in a case where the weight calculation unit 211 outputs the interference removal weights $w_{00}$, $w_{01}$, $w_{10}$, and $w_{11}$, the interference-free reception symbol sequence $r_m[t]$ is expressed by Formula (14) and Formula (15) below.

$$r_0[t] = w_{00} y_0[t] + w_{01} y_1[t] \quad \cdots (14)$$

$$r_1[t] = w_{11} y_1[t] + w_{10} y_0[t] \quad \cdots (15)$$

The demodulation unit 213 performs demodulation processing on the interference-free reception symbol sequence, and generates a reception bit sequence.

By calculating the average power of the channel coefficients estimated by the channel estimation unit 207, the signal power of the interference wave can be grasped. For this reason, it is possible not only to improve the communication performance by removing the interference in the mobile station 20, but also to grasp the state of co-channel interference in the wireless communication system 1. In order to obtain the signal power of the interference signal in a conventional manner, it is necessary to stop a plurality of base stations 10 included in the wireless communication system 1 and cause only one base station 10 to perform transmission for measurement. Therefore, the operation of the wireless communication system 1 has to be stopped. Further, all the base stations 10 assumed to be interference sources have to be validated. The above-mentioned configuration in which the base stations 10 including transmission devices use different known symbol sequences makes it possible to immediately grasp the signal power of the interference signal from each base station 10 while continuing the operation of the wireless communication system 1. Further, the mobile station 20 may accumulate the signal power of interference signals so as to enable the base station 10 or a device installed on the ground such as a control device (not illustrated) to manage the signal power of interference signals. Consequently, the situation of co-channel interference can be constantly monitored.

If the distance between the base station 10-1 and the mobile station 20 is different from the distance between the base station 10-2 and the mobile station 20, the mobile station 20 is likely to receive the known symbol sequence inserted by the base station 10-1 and the known symbol sequence inserted by the base station 10-2 at different timings. However, the above-mentioned configuration can tolerate a difference of approximately $\pm 0.5$ symbols, and cope with a change in the amount of difference that can be caused by the movement of the mobile station 20. In the first embodiment, the mobile station 20 operates according to the timing of the base station 10 at which the known symbol sequence that is input to the known symbol sequence determination unit 203 is inserted.

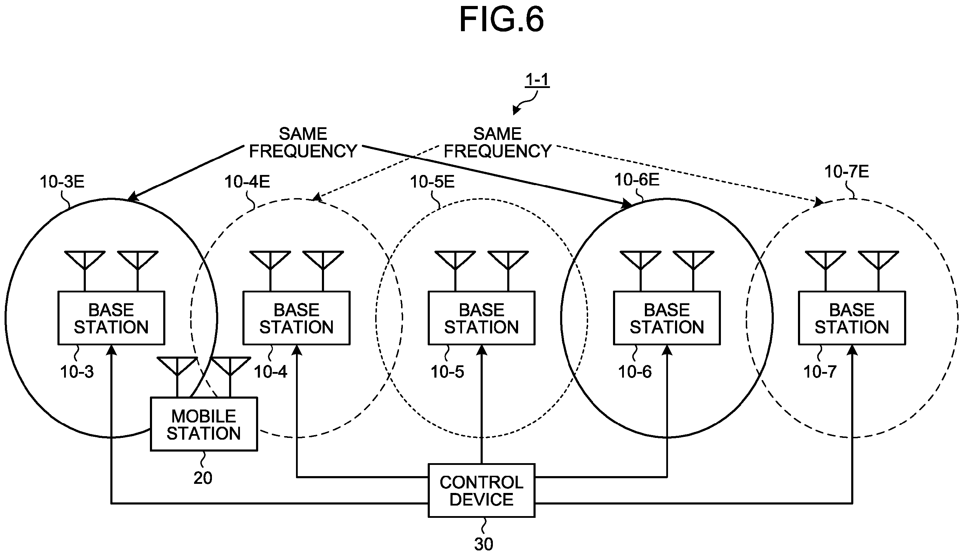

FIG. 6 is a diagram illustrating a configuration of a wireless communication system 1-1 according to a modification of the first embodiment of the present invention. In FIG. 1, the transmission frequencies of the adjacent base stations 10-1 and 10-2 are the same, and the communication area 10-1E of the base station 10-1 and the communication area 10-2E of the base station 10-2 partially overlap. The wireless communication system 1-1 illustrated in FIG. 6 includes a base station 10-3, a base station 10-4, a base station 10-5, a base station 10-6, and a base station 10-7. The base station 10-3 forms a communication area 10-3E and can communicate with the mobile station 20 present in the communication area 10-3E. The base station 10-4 forms a communication area 10-4E and can communicate with the mobile station 20 present in the communication area 10-4E. The base station 10-5 forms a communication area 10-5E and can communicate with the mobile station 20 present in the communication area 10-5E. The base station 10-6 forms a communication area 10-6E and can communicate with the mobile station 20 present in the communication area 10-6E. The base station 10-7 forms a communication area 10-7E and can communicate with the mobile station 20 present in the communication area 10-7E.

In the wireless communication system 1-1, three frequencies are repeatedly used. The base station 10-3 and the base station 10-6 use the same frequency, and the base station 10-4 and the base station 10-7 use the same frequency. In this case, the base stations 10 using the same frequency are only required to use different known symbol sequences. Specifically, the base station 10-3 is only required to use a known symbol sequence different from the known symbol sequence that the base station 10-6 uses, and the base station 10-4 is only required to use a known symbol sequence different from the known symbol sequence that the base station 10-7 uses.

As described above, according to the first embodiment of the present invention, the mobile station 20 including a reception device performs channel estimation using a reception signal received from at least one of a plurality of base stations 10 including transmission devices, an average time parameter, and at least one of a plurality of known sequences corresponding to the plurality of transmission devices, and removes an interference signal included in the reception signal using a result of the channel estimation. The average time parameter is a parameter indicating the part of the reception signal to be used for the channel estimation, and determined based on the moving speed of a moving one of the reception device and the transmission devices, i.e. the moving speed of the mobile station 20 in the first embodiment. Because the average time parameter is a value based on the moving speed of the mobile station 20, channel estimation is performed using the range of reception symbols that depends on the moving speed. Therefore, even when the moving speed is high and the fluctuation in channel coefficients is large, it is possible to improve the accuracy of channel estimation. Therefore, it is possible to improve the accuracy of extracting the interference signal included in the reception signal, and to improve the interference removal performance.

According to the first embodiment, a plurality of transmission devices provided in a plurality of base stations 10 uses the same frequency, and inserts, into transmission signals, known sequences that differ between the base stations 10. Therefore, the mobile station 20 including a reception device can grasp the signal power of the interference signal without stopping the wireless communication system 1. Further, by using the signal power of the interference signal, the situation of co-channel interference can be constantly monitored.

Second Embodiment.

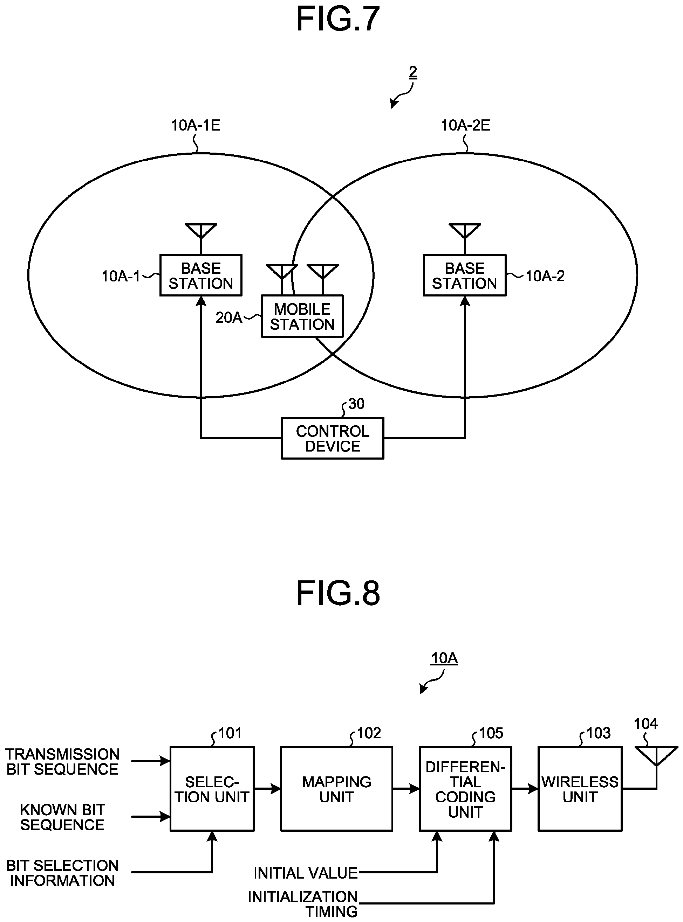

FIG. 7 is a diagram illustrating a configuration of a wireless communication system 2 according to the second embodiment of the present invention. The wireless communication system 2 according to the second embodiment includes a base station 10A-1, a base station 10A-2, a mobile station 20A, and the control device 30. Hereinafter, when it is not necessary to distinguish between the base station 10A-1 and the base station 10A-2, they are simply referred to as the base station 10A. The wireless communication system 2 improves the accuracy of channel estimation by updating the average time parameter based on the moving speed of the mobile station 20A.

Although FIG. 7 illustrates two base stations 10A and one mobile station 20A for simplicity, the configuration of the present embodiment is not limited to this example. The wireless communication system 2 may include three or more base stations 10A and may include two or more mobile stations 20A.

The base station 10A-1 forms a communication area 10A-1E and can communicate with the mobile station 20A present in the communication area 10A-1E. The base station 10A-2 forms a communication area 10A-2E and can communicate with the mobile station 20A present in the communication area 10A-2E. The transmission frequencies of the base station 10A-1 and the base station 10A-2 are the same, and the communication area 10A-1E of the base station 10A-1 and the communication area 10A-2E of the base station 10A-2 partially overlap.

FIG. 8 is a diagram illustrating a configuration of the base station 10A according to the second embodiment of the present invention. The base station 10A includes the selection unit 101, the mapping unit 102, the wireless unit 103, the antenna 104, and a differential coding unit 105.

In the configuration of the base station 10A, parts similar to those of the base station 10 are denoted by the same reference signs, and the description thereof is omitted. Hereinafter, differences from the base station 10 will be mainly described. The mapping unit 102 outputs the mapped transmission symbol sequence to the differential coding unit 105, instead of the wireless unit 103. The differential coding unit 105 differentially codes the transmission symbol sequence output from the mapping unit 102 to obtain a differentially coded symbol sequence. The differential coding unit 105 outputs the differentially coded symbol sequence to the wireless unit 103. The wireless unit 103 performs transmission processing on the differentially coded symbol sequence, and outputs the obtained transmission signal through the antenna 104.

The differential coding unit 105 holds the output result of one preceding symbol from the differential coding unit 105, and performs differential coding using the output result of one preceding symbol from the differential coding unit 105 and the transmission symbol output by the mapping unit 102. For example, let s[n] denote the transmission symbol output by the mapping unit 102, and let c[n] denote the output from the differential coding unit 105. Here, "n" is a transmission symbol number equal to or more than zero. Then, c[n] generated by the differential coding unit 105 using the transmission symbol s[n] and the output c[n-1] of one preceding symbol from the differential coding unit 105 is expressed by Formula (16) below.

$$c[n] = s[n]c[n-1] \quad \ldots \quad (16)$$

Because differential coding requires an initial value, c[-1] is defined as the initial value. The differential coding unit 105 receives the initial value and the initialization timing from the control device 30. The initialization timing is input at the timing that the output from the mapping unit 102 is synchronized with the head of the known symbol sequence. When the initialization timing is input, the differential coding unit 105 initializes the differential coding using Formula (17) below. Consequently, the known symbol sequence is always fixed irrespective of the content of the data symbol sequence before the known symbol sequence.

$$c[n] = s[n]c[-1] \quad \ldots \quad (17)$$

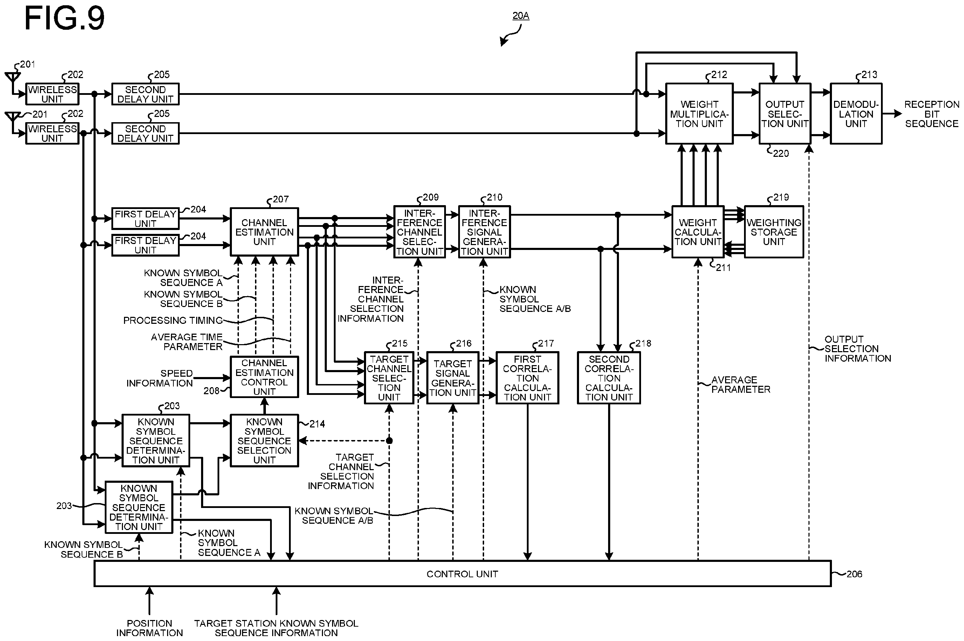

FIG. 9 is a diagram illustrating a configuration of the mobile station 20A according to the second embodiment of the present invention. The mobile station 20A includes two antennas 201, two wireless units 202, two known symbol sequence determination units 203, two first delay units 204, two second delay units 205, the control unit 206, the channel estimation unit 207, the channel estimation control unit 208, the interference channel selection unit 209, the interference signal generation unit 210, the weight calculation unit 211, the weight multiplication unit 212, and the demodulation unit 213. The mobile station 20A further includes a known symbol sequence selection unit 214, a target channel selection unit 215, a target signal generation unit 216, a first correlation calculation unit 217, a second correlation calculation unit 218, a weighting storage unit 219, and an output selection unit 220.

Whereas the mobile station 20 includes one known symbol sequence determination unit 203, the mobile station 20A includes a plurality of known symbol sequence determination units 203. The speed information of the mobile station 20A is input to the channel estimation control unit 208. Hereinafter, the description of parts similar to those of the mobile station 20 will be omitted, and differences from the mobile station 20 will be mainly described.

Each of the plurality of known symbol sequence determination units 203 provided in the mobile station 20A receives the known symbol sequence A or the known symbol sequence B from the control unit 206. Each of the plurality of known symbol sequence determination units 203 calculates a correlation value, outputs the correlation value to the control unit 206, and outputs the position of the known symbol sequence to the known symbol sequence selection unit 214.

The known symbol sequence selection unit 214 selects one of the positions of the known symbol sequences output from the plurality of known symbol sequence determination units 203 based on target channel selection information output from the control unit 206. For example, in a case where the target channel selection information indicates that the known symbol sequence A is selected, the known symbol sequence selection unit 214 selects the output from the known symbol sequence determination unit 203 to which the known symbol sequence A has been input. The known symbol sequence selection unit 214 outputs the position of the known symbol sequence selected to the channel estimation control unit 208.

Whereas the control unit 206 in the first embodiment receives the target station known symbol sequence information, the control unit 206 in the second embodiment receives not only the target station known symbol sequence information but also the position information of the mobile station 20A from outside the mobile station 20A. The control unit 206 identifies the type of the known symbol sequence inserted into the target signal from the target station known symbol sequence information or the position information of the mobile station 20A. The control unit 206 may identify the type of the known symbol sequence inserted into the target signal based on the correlation values input from the plurality of known symbol sequence determination units 203. The control unit 206 outputs the identified known symbol sequence to the target signal generation unit 216. The control unit 206 also outputs, to each of the known symbol sequence selection unit 214 and the target channel selection unit 215, the target channel selection information for selecting a channel coefficient between the base station 10A that has transmitted the target signal and the mobile station 20A or a processing timing from the type of the known symbol sequence inserted into the target signal.

Further, the control unit 206 outputs output selection information to the output selection unit 220 based on the correlation values input from the first correlation calculation unit 217 and the second correlation calculation unit 218. For example, in a case where the correlation value input from the second correlation calculation unit 218 is larger than a predetermined threshold value, the control unit 206 outputs output selection information for causing the output selection unit 220 to output the interference-removed reception symbol sequence. In a case where the correlation value input from the second correlation calculation unit 218 is equal to or smaller than the threshold value, the control unit 206 outputs output selection information for causing the output selection unit 220 to output the interference-unremoved reception symbol sequence. In the above description, the correlation value input from the second correlation calculation unit 218 is compared with the threshold value, but the correlation value input from the first correlation calculation unit 217 may be used instead of the threshold value.

The control unit 206 outputs an average parameter to the weight calculation unit 211. The average parameter is a parameter related to the convergence characteristics of the interference removal weight. The average parameter may be input from outside the mobile station 20A, or may be determined by the mobile station 20A. The average parameter may be set to a fixed value based on the average moving speed of the mobile station 20A in the system, or may be adaptively changed according to the moving speed or position information of the mobile station 20A.

The channel estimation control unit 208 determines the average time parameter based on the speed information input from outside the mobile station 20A. The speed information indicates the moving speed of the mobile station 20A, and is information generated based on, for example, a measurement value of a speed meter mounted on the mobile station 20, global positioning system (GPS) information, and the like. By using the average time parameter determined based on the speed information, it is possible to use the optimal average time parameter regardless of the moving speed.

The channel estimation unit 207 outputs channel coefficients to the target channel selection unit 215 in addition to the interference channel selection unit 209. The target channel selection unit 215 selects a channel coefficient for the target signal from among a plurality of channel estimation values output from the channel estimation unit 207. The selection of a channel coefficient is performed based on the target channel selection information. Note that the target channel selection unit 215 selects a channel coefficient different from the channel coefficient selected by the interference channel selection unit 209.

The target signal generation unit 216 generates a target signal sequence using the known symbol sequence input from the control unit 206 and the channel coefficient input from the target channel selection unit 215. The target signal generation unit 216 outputs the generated target signal sequence to the first correlation calculation unit 217.

The interference signal generation unit 210 outputs the interference signal sequence to the second correlation calculation unit 218 in addition to the weight calculation unit 211. The first correlation calculation unit 217 calculates a cross-correlation for the target signal sequence output from the target signal generation unit 216, and outputs the correlation value that is the result of the calculation to the control unit 206. The second correlation calculation unit 218 calculates a cross-correlation for the interference signal sequence output from the interference signal generation unit 210, and outputs the correlation value as the result of the calculation to the control unit 206.

The weight calculation unit 211 outputs, to the weighting storage unit 219, at least one of the value generated in the process of calculating a weight and the calculated weight. The weight calculation unit 211 performs averaging processing on the value stored in the weighting storage unit 219 and at least one of the value generated in the process of calculating a weight and the calculated weight. The average parameter related to averaging processing is input from the control unit 206. The weight calculation unit 211 can perform, for example, averaging processing for averaging the created weights. In a case where the interference signal power is calculated during weight generation, the weight calculation unit 211 can perform averaging processing for averaging the interference power for several frames.

The output selection unit 220 selects, based on the output selection information input from the control unit 206, either the interference-removed reception symbol sequence output from the weight multiplication unit 212 or the interference-unremoved reception symbol sequence input to the weight multiplication unit 212, and outputs the selected symbol sequence to the demodulation unit 213. The demodulation unit 213 performs differential decoding processing in addition to the processing that the demodulation unit 213 of the mobile station 20 performs.

As described above, according to the second embodiment of the present invention, the mobile station 20A including a reception device uses the average time parameter determined based on the speed information input from outside the mobile station 20A to estimate channel coefficients and remove the interference signal included in the reception signal. The average time parameter is updated in accordance with the fluctuation in the moving speed. Therefore, even when the moving speed of the mobile station 20A is high and the fluctuation in channel coefficients is large, it is possible to improve the accuracy of channel estimation. Therefore, it is possible to improve the accuracy of extracting the interference signal included in the reception signal, and to improve the interference removal performance.

Further, according to the second embodiment, the mobile station 20A uses channel estimation values to reproduce the target signal in addition to the interference signal. Then, a correlation value for the interference signal and a correlation value for the target signal are obtained, and based on the correlation values, either the signal not subjected to the interference removal processing or the signal subjected to the interference removal processing is selected and output. With such a configuration, it is possible to output not only the signal subjected to the interference removal processing using channel estimation and weights but also the signal not subjected to the interference removal processing. Therefore, it is possible to select whether the interference removal processing is required according to the state of the wireless communication system 2, and to improve the communication performance.

Third Embodiment.

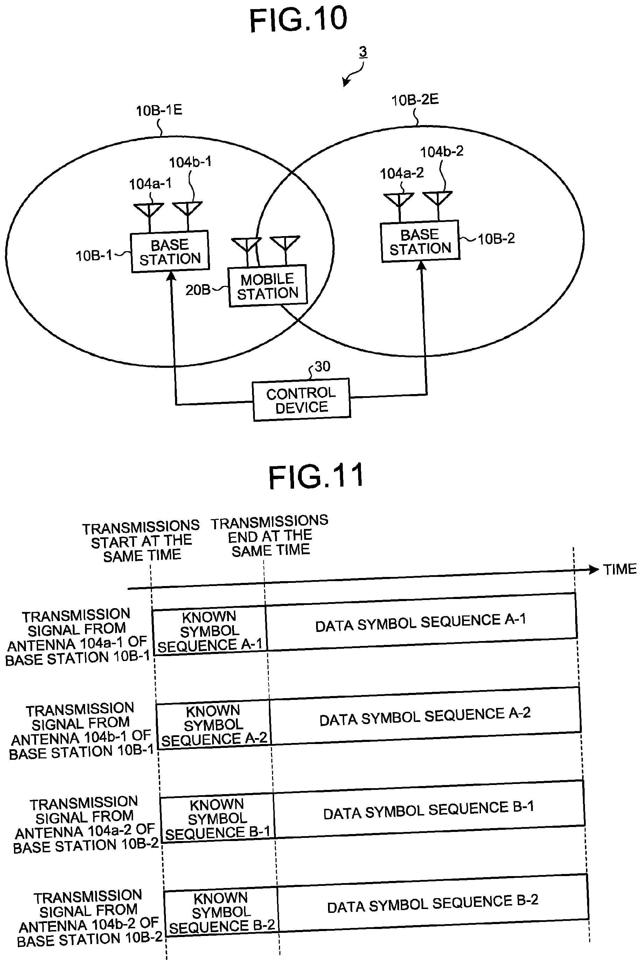

FIG. 10 is a diagram illustrating a configuration of a wireless communication system 3 according to the third embodiment of the present invention. The wireless communication system 3 according to the third embodiment includes a base station 10B-1, a base station 10B-2, a mobile station 20B, and the control device 30. Hereinafter, when it is not necessary to distinguish between the base station 10B-1 and the base station 10B-2, they are simply referred to as the base station 10B.

In the third embodiment, an interference signal is extracted by subtracting a target signal from a reception signal. With such a configuration, it is possible to improve the accuracy of interference signal extraction when the power of the interference signal is small, and to improve the interference removal performance. Note that the base station 10B in the third embodiment includes two antennas, and uses a differential space-time block coding (DSTBC) scheme for causing the two antennas to transmit different symbol sequences. The mobile station 20B also includes a reception device capable of receiving transmitted signals using two antennas.

The base station 10B-1 forms a communication area 10B-1E and can communicate with the mobile station 20B present in the communication area 10B-1E. The base station 10B-2 forms a communication area 10B-2E and can communicate with the mobile station 20B present in the communication area 10B-2E. The communication area 10B-1E of the base station 10B-1 and the communication area 10B-2E of the base station 10B-2 partially overlap. The base station 10B-1 and the base station 10B-2 use the same transmission frequency.

The base station 10B-1 includes an antenna 104a-1 and an antenna 104b-1, and the base station 10B-2 includes an antenna 104a-2 and an antenna 104b-2. A known symbol sequence is inserted into a transmission signal from the base station 10B.

FIG. 11 is a diagram illustrating a format of transmission signals from the base stations 10B-1 and 10B-2 according to the third embodiment of the present invention. The transmission signal from the antenna 104a-1 of the base station 10B-1 includes a known symbol sequence A-1 and a data symbol sequence A-1. The transmission signal from the antenna 104b-1 of the base station 10B-1 includes a known symbol sequence A-2 and a data symbol sequence A-2. The transmission signal from the antenna 104a-2 of the base station 10B-2 includes a known symbol sequence B-1 and a data symbol sequence B-1. The transmission signal from the antenna 104b-2 of the base station 10B-2 includes a known symbol sequence B-2 and a data symbol sequence B-2.

The base station 10B-1 and the base station 10B-2 transmit the transmission signals in synchronization. The lengths of the known symbol sequence A-1, the known symbol sequence A-2, the known symbol sequence B-1, and the known symbol sequence B-2 are the same. In the transmission signals, the known symbol sequence A-1, the known symbol sequence A-2, the known symbol sequence B-1, and the known symbol sequence B-2 are inserted at the same position. Consequently, the transmission of the known symbol sequence A-1, the transmission of the known symbol sequence A-2, the transmission of the known symbol sequence B-1, and the transmission of the known symbol sequence B-2 can be timed to coincide. Therefore, the transmission of the known symbol sequence A-1, the transmission of the known symbol sequence A-2, the transmission of the known symbol sequence B-1, and the transmission of the known symbol sequence B-2 start at the same time and also end at the same time.

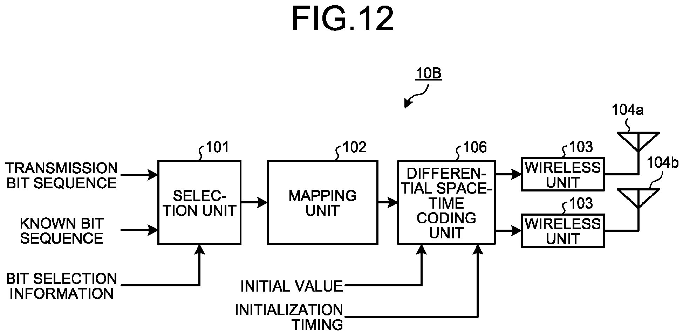

FIG. 12 is a diagram illustrating a configuration of the base station 10B according to the third embodiment of the present invention. The base station 10B includes the selection unit 101, the mapping unit 102, a differential space-time coding unit 106, a plurality of wireless units 103, and a plurality of antennas 104a and 104b.

The base station 10B illustrated in FIG. 12 includes the plurality of antennas 104, namely the two antennas 104a and 104b, and the two wireless units 103 corresponding one-to-one to the two antennas 104a and 104b, which is different from the base station 10 illustrated in FIG. 3 in which the one antenna 104 and the one wireless unit 103 are provided. Further, the base station 10B includes the differential space-time coding unit 106 between the mapping unit 102 and the wireless unit 103, which is different from the base station 10 in which the output from the mapping unit 102 is directly input to the wireless unit 103. Hereinafter, the description of parts similar to those of the base station 10 will be omitted, and differences from the base station 10 will be mainly described.

The differential space-time coding unit 106 generates a transmission symbol matrix X[l] using two input transmission symbols as one block. Here, "1" indicates a block number that is an integer of zero or more. The differential space-time coding matrix Y[l] generated by the differential space-time coding unit 106 is expressed by Formula (18) below using X[l] and the differential space-time coding matrix Y[l-1] which is the output of one preceding block.

$$Y[l] = X[l]Y[l-1] \quad \dots \quad (18)$$

Let s[2l] and s[2l+1] denote two transmission symbols. Then, X[l] is expressed by Formula (19) below. Let d[2l] and d[2l+1] denote two symbols of the differential space-time coding matrix Y[l] to be output. Then, the differential space-time coding matrix Y[l] is expressed by Formula (20) below.

$$X[l] = \begin{bmatrix} s[2l] & s[2l+1] \\ -s^*[2l+1] & s^*[2l] \end{bmatrix} \quad \dots (19)$$

$$Y[l] = \begin{bmatrix} d[2l] & d[2l+1] \\ -d^*[2l+1] & d^*[2l] \end{bmatrix} \quad \dots (20)$$

Here, s*[2l] is the value of the complex conjugate of s[2l]. Similarly, d*[2l] is the value of the complex conjugate of d[2l]. As expressed by Formula (17), the differential space-time coding matrix Y[l] to be output is necessary for the processing of the next block. Therefore, the differential space-time coding matrix Y[l] is output to the wireless unit 103 and also held in the differential space-time coding unit 106.

Because differential coding requires an initial value, Y[-1] is defined as the initial value. The differential space-time coding unit 106 receives the initial value and the initialization timing from the control device 30. The initialization timing is input at the timing that the output from the mapping unit 102 is synchronized with the head of the known symbol sequence. When the initialization timing is input, the differential space-time coding unit 106 initializes the differential space-time coding using Formula (21) below. Consequently, the known symbol sequence is always fixed irrespective of the content of the data symbol sequence before the known symbol sequence.

$$Y[l]=X[l]c[-1] \quad ... \quad (21)$$

In Formula (18), multiplication and addition/subtraction are performed on all elements as a matrix operation. However, in order to reduce the operation amount of the differential space-time coding unit 106, for example, only two elements, s[2l] and s[2l+1], may be calculated by a matrix operation, and s*[2l] and -s*[2l+1] may be obtained by the complex conjugate and sign inversion of s[21] and s[2l+1]. The differential space-time coding unit 106 outputs d[2l] and d*[2l] to one wireless unit 103 in this order, and outputs d[2l+1] and d*[2l+t] to the other wireless unit 103 in this order.

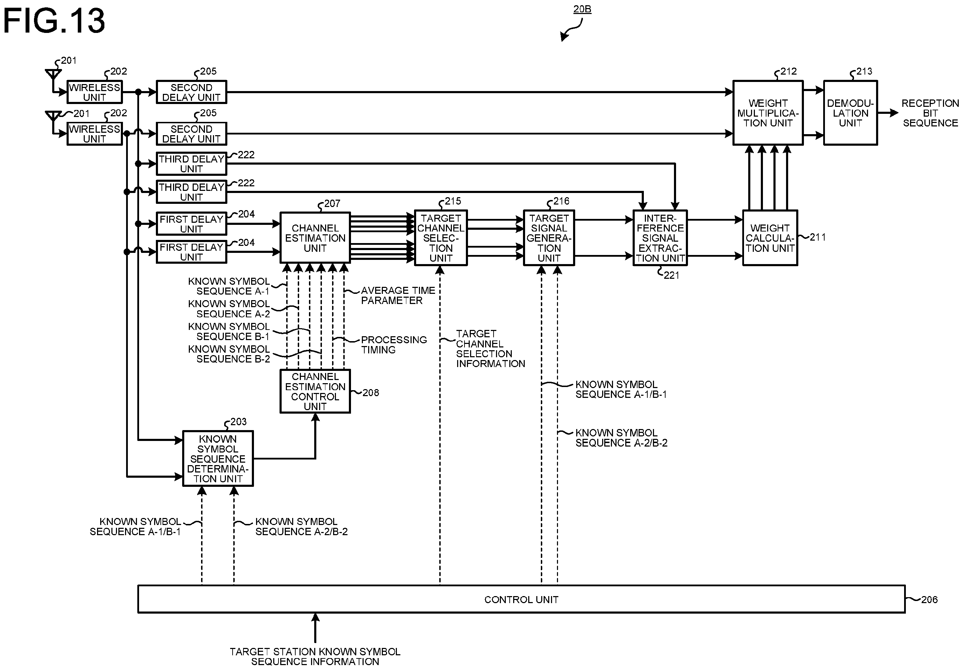

FIG. 13 is a diagram illustrating a configuration of the mobile station 20B according to the third embodiment of the present invention. The mobile station 20B includes the antenna 201, the wireless unit 202, the known symbol sequence determination unit 203, the first delay unit 204, the second delay unit 205, the control unit 206, the channel estimation unit 207, the channel estimation control unit 208, the weight calculation unit 211, the weight multiplication unit 212, and the demodulation unit 213. The mobile station 20B further includes the target channel selection unit 215, the target signal generation unit 216, an interference signal extraction unit 221, and a third delay unit 222.

In the mobile station 20 illustrated in FIG. 5, the known symbol sequence determination unit 203 calculates the correlation of the reception symbol sequence input from the wireless unit 202 with the known symbol sequence A or the known symbol sequence B input from the control unit 206, and detects the position of the known symbol sequence inserted into the reception symbol sequence. In contrast, the known symbol sequence determination unit 203 according to the third embodiment receives two known symbol sequences and calculates the sum of the correlation values. For example, in a case where the known symbol sequences inserted into the target signal are the known symbol sequence A-1 and the known symbol sequence A-2, the known symbol sequence determination unit 203 calculates the correlation between the reception symbol sequence and the known symbol sequence A-1 and the correlation between the reception symbol sequence and the known symbol sequence A-2, and outputs the timing of the maximum sum of the correlation values to the channel estimation control unit 208.

The control unit 206 according to the first and second embodiments outputs the known symbol sequence A or the known symbol sequence B to the known symbol sequence determination unit 203 and the interference signal generation unit 210. In contrast, in the third embodiment, two known symbol sequences are output to each of the known symbol sequence determination unit 203 and the target signal generation unit 216. For example, in a case where the target station known symbol sequence information indicates that the known symbol sequences inserted into the target signal are the known symbol sequences A-1 and A-2, the control unit 206 outputs, to each of the known symbol sequence determination unit 203 and the target signal generation unit 216, the known symbol sequences A-1 and A-2, which are the known symbol sequences inserted into the target signal.

The channel estimation unit 207 in the first embodiment performs channel estimation using two known symbol sequences. In contrast, in the third embodiment, channel estimation is performed using four known symbol sequences. For example, in the example of FIG. 13, the known symbol sequences used by the channel estimation unit 207 are the known symbol sequence A-1, the known symbol sequence A-2, the known symbol sequence B-1, and the known symbol sequence B-2.

Here, let $s_{00}[k]$, $s_{01}[k]$, $s_{10}[k]$, and $s_{11}[k]$ denote the known symbol sequence A-1, the known symbol sequence A-2, the known symbol sequence B-1, and the known symbol sequence B-2, respectively. Let $h_{0m}[t]$, $h_{1m}[t]$, $g_{0m}[t]$, and $g_{1m}[t]$ denote the channel coefficient between the antenna that has transmitted the known symbol sequence A-1 and the mobile station 20B, the channel coefficient between the antenna that has transmitted the known symbol sequence A-2 and the mobile station 20B, the channel coefficient between the antenna that has transmitted the known symbol sequence B-1 and the mobile station 20B, and the channel coefficient between the antenna that has transmitted the known symbol sequence B-2 and the mobile station 20B, respectively. Here, in the third embodiment, the reception symbol sequence $y_m[t]$ is expressed by Formula (22) below using $h_{0m}[t]$, $h_{1m}[t]$, $g_{0m}[t]$, $g_{1m}[t]$, $s_{00}[k]$, $s_{01}[k]$, $s_{10}[k]$, $s_{11}[k]$, and $n_m[t]$.

$$y_m[t_0 + k] = \begin{bmatrix} s_{00}[k] & s_{01}[k] & s_{10}[k] & s_{11}[k] \end{bmatrix} \begin{bmatrix} h_{0m}[t_0 + k] \\ h_{1m}[t_0 + k] \\ g_{0m}[t_0 + k] \\ g_{1m}[t_0 + k] \end{bmatrix} + n_m[t_0 + k] \quad ...(22)$$

The channel estimation unit 207 calculates an estimation value h(hat)$_{0m}$[t] of $h_{0m}$[t], an estimation value

h(hat)$_{1m}$[t] of h$_{1m}$[t], an estimation value g(hat)$_{0m}$[t] of g$_{0m}$[t], and an estimation value g(hat)$_{1m}$[t] of g$_{1m}$[t]. Let us assume that the temporal fluctuation in the channel coefficients for 2L+1 reception symbols y$_m$[t$_0$+k-L] to y$_m$[t$_0$+k+L] in the range of t=t$_0$+k-L to t=t$_0$+k+L can be ignored. In this case, the channel estimation values can be obtained using Formula (23), Formula (24), and Formula (25) below.

$$\hat{H}_m[k] = (S^H[k]S[k])^{-1}S^H[k]Y_m[k] \quad \cdots (23)$$

$$\hat{H}_m[k] = \begin{bmatrix} \hat{h}_{0m}[t_0+k] \\ \hat{h}_{1m}[t_0+k] \\ \hat{g}_{0m}[t_0+k] \\ \hat{g}_{1m}[t_0+k] \end{bmatrix} \quad \cdots (24)$$

$$S[k] = \begin{bmatrix} s_{00}[k-L] & s_{01}[k-L] & s_{10}[k-L] & s_{11}[k-L] \\ \vdots & \vdots & \vdots & \vdots \\ s_{00}[k] & s_{01}[k] & s_{10}[k] & s_{11}[k] \\ \vdots & \vdots & \vdots & \vdots \\ s_{00}[k+L] & s_{01}[k+L] & s_{10}[k+L] & s_{11}[k+L] \end{bmatrix} \quad \cdots (25)$$

In the first embodiment, the channel estimation control unit 208 outputs, to the channel estimation unit 207, the two known symbol sequences inserted into the transmission signals. In the third embodiment, however, the channel estimation control unit 208 outputs, to the channel estimation unit 207, the four known symbol sequences inserted into the transmission signals.

The target channel selection unit 215 selects a channel coefficient for the target signal from among a plurality of channel estimation values output from the channel estimation unit 207 based on the target channel selection information input from the control unit 206. For example, suppose that h(hat)$_{0m}$[t], h(hat)$_{1m}$[t], g(hat)$_{0m}$[t], and g (hat)$_{1m}$[t] obtained using Formulas (23) to (25) above are input from the channel estimation unit 207 to the target channel selection unit 215. Then, in a case where the target channel selection information from the control unit 206 indicates that channel coefficients for the known symbol sequence A-1 and the known symbol sequence A-2 are to be selected, the target channel selection unit 215 selects h(hat)$_{0m}$[t] and h(hat)$_{1m}$[t]. The target channel selection unit 215 then outputs the selected h(hat)$_{0m}$[t] and h(hat)$_{1m}$[t] to the target signal generation unit 216.

The target signal generation unit 216 generates a target signal sequence using the known symbol sequences input from the control unit 206 and the channel coefficients input from the target channel selection unit 215. For example, in a case where the known symbol sequences input from the control unit 206 are the known symbol sequence A-1 and the known symbol sequence A-2 and the channel coefficients input from the channel estimation unit 207 are h(hat)$_{0m}$[t] and h(hat)$_{1m}$[t], the target signal sequence rd$_m$[k] is expressed by Formula (26) below. The target signal generation unit 216 outputs the generated target signal sequence rd$_m$[k] to the interference signal extraction unit 221.

$$rd_m[k] = s_{00}[k]\hat{h}_{0m}[t_0+k] + s_{01}[k]\hat{h}_{0m}[t_0+k] \quad \cdots (26)$$

The interference signal extraction unit 221 extracts the interference signal sequence from the reception symbol sequence using the reception symbol sequence input from the third delay unit 222 and the target signal sequence input from the target signal generation unit 216. For example, in a case where the target signal sequence rd$_m$[k] is input from the target signal generation unit 216 and y$_m$[t$_0$+k] is input from the third delay unit 222, the interference signal sequence ri$_m$[k] is expressed by Formula (27) below. The interference signal extraction unit 221 outputs the extracted interference signal sequence ri$_m$[k] to the weight calculation unit 211.

$$ri_m[k] = y_m[t_0+k] - rd_m[k] \quad ... \quad (27)$$

The third delay unit 222 delays the reception symbol sequence input from the wireless unit 202 by the processing time in which the reception symbol sequence output from the first delay unit 204 is processed by the channel estimation unit 207, the target channel selection unit 215, and the target signal generation unit 216 and input to the interference signal extraction unit 221 so as to enable the interference signal extraction unit 221 to receive the interference signal sequence and the reception symbol sequence at the same timing. The third delay unit 222 then outputs the delayed reception symbol sequence to the interference signal extraction unit 221.

The weight calculation unit 211 receives the interference signal sequence from the interference signal extraction unit 221. The function of the weight calculation unit 211 is the same as that in the first embodiment, and the description thereof is omitted here. The demodulation unit 213 performs differential space-time decoding processing in addition to the processing described in the first embodiment.

As described above, in the third embodiment of the present invention, the interference signal is extracted by subtracting the target signal from the reception signal. With such a configuration, it is possible to improve the accuracy of interference signal extraction when the power of the interference signal is small, and to improve the interference removal performance.

Fourth Embodiment.

A wireless communication system 4 according to the fourth embodiment of the present invention includes a mobile station 20C instead of the mobile station 20B illustrated in FIG. 10. The wireless communication system 4 has a function of updating a parameter that is based on the moving speed in accordance with the fluctuation in the moving speed. Further, the wireless communication system 4 extracts an interference signal by subtracting a target signal from a reception signal.

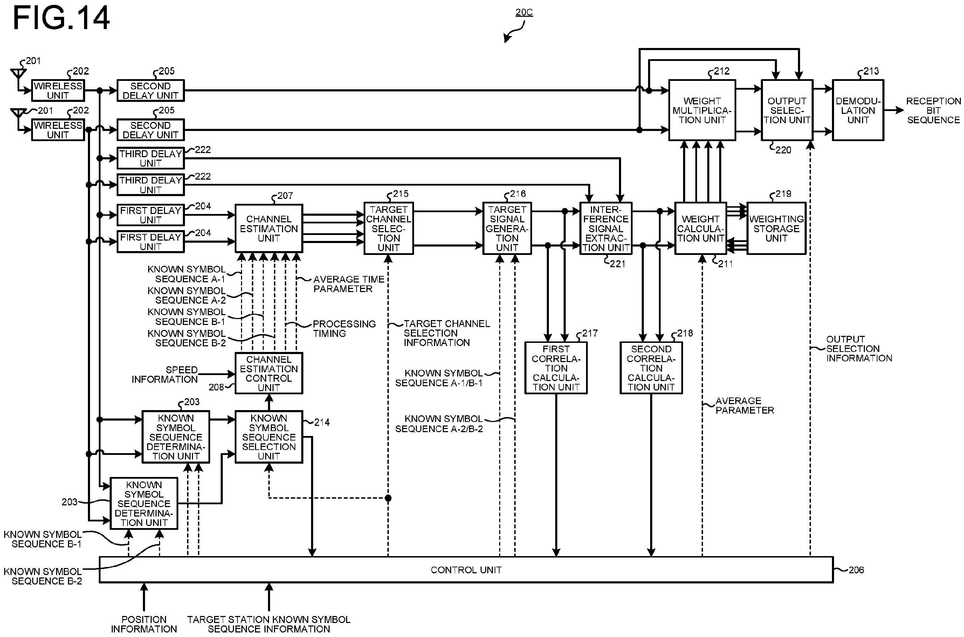

FIG. 14 is a diagram illustrating a configuration of the mobile station 20C according to the fourth embodiment of the present invention. The mobile station 20C includes the two antennas 201, the two wireless units 202, the two known symbol sequence determination units 203, the two first delay units 204, the two second delay units 205, the control unit 206, the channel estimation unit 207, the channel estimation control unit 208, the weight calculation unit 211, the weight multiplication unit 212, and the demodulation unit 213. The mobile station 20C further includes the target channel selection unit 215, the target signal generation unit 216, the interference signal extraction unit 221, and two third delay units 222. The mobile station 20C further includes the known symbol sequence selection unit 214, the first correlation calculation unit 217, the second correlation calculation unit 218, the weighting storage unit 219, and the output selection unit 220.

The control unit 206 receives not only the target station known symbol sequence information but also the position information of the mobile station 20C from outside the mobile station 20C. The control unit 206 identifies the type of the known symbol sequence inserted into the target signal based on the input target station known symbol sequence information or position information. The control unit 206 may identify the type of the known symbol sequence based on the correlation values input from the plurality of known symbol sequence determination units 203. The control unit 206 generates target channel selection information based on the identified type of the known symbol sequence, and outputs the generated target channel selection information to each of the known symbol sequence selection unit 214 and the target channel selection unit 215.

Further, the control unit 206 receives a correlation value from each of the first correlation calculation unit 217 and the second correlation calculation unit 218. The control unit 206 generates output selection information based on at least one of these correlation values, and outputs the generated output selection information to the output selection unit 220. For example, in a case where the correlation value input from the second correlation calculation unit 218 is larger than a threshold value, the control unit 206 generates output selection information for causing the output selection unit 220 to output the interference-removed reception symbol sequence. In a case where the correlation value input from the second correlation calculation unit 218 is equal to or smaller than the threshold value, the control unit 206 generates output selection information for causing the output selection unit 220 to output the interference-unremoved reception symbol sequence. In the above description, the correlation value input from the second correlation calculation unit 218 is compared with the threshold value, but the correlation value input from the first correlation calculation unit 217 may be used instead of the threshold value. The control unit 206 outputs an average parameter to the weight calculation unit 211. The average parameter may be input from outside the mobile station 20C, or may be adaptively changed according to the moving speed.

Speed information indicating the moving speed of the mobile station 20C is input to the channel estimation control unit 208 from outside the mobile station 20C. The channel estimation control unit 208 determines the average time parameter based on the speed information, and outputs the determined average time parameter to the channel estimation unit 207. The channel estimation unit 207 performs channel estimation processing using the average time parameter output from the channel estimation control unit 208, and thus can improve the accuracy of channel estimation using the optimal average time parameter regardless of the moving speed of the mobile station 20C.

The input/output and operation of the known symbol sequence selection unit 214 are the same as those in the second embodiment. The input/output and operation of the first correlation calculation unit 217 are the same as those in the second embodiment. The output and operation of the second correlation calculation unit 218 are the same as those in the second embodiment. In the second embodiment, the interference signal sequence input to the second correlation calculation unit 218 is the output from the interference signal generation unit 210. In contrast, in the fourth embodiment, the interference signal sequence input to the second correlation calculation unit 218 is the output from the interference signal extraction unit 221. The output and operation of the weight calculation unit 211 are the same as those in the second embodiment. In the second embodiment, the interference signal sequence input to the weight calculation unit 211 is the output from the interference signal generation unit 210. In contrast, in the fourth embodiment, the interference signal sequence input to the weight calculation unit 211 is the output from the interference signal extraction unit 221. The input/output and operation of the weighting storage unit 219 are the same as those in the second embodiment. The input/output and operation of the output selection unit 220 are the same as those in the second embodiment.

As described above, according to the fourth embodiment of the present invention, the mobile station 20C has the function, described in the second embodiment, of obtaining a correlation value for the interference signal and a correlation value for the target signal, and based on the correlation values, selecting and outputting either the signal not subjected to the interference removal processing or the signal subjected to the interference removal processing. The mobile station 20C also has the function, described in the third embodiment, of extracting the interference signal by subtracting the target signal from the reception signal. With such a configuration, the mobile station 20C can perform reception processing according to the state of interference in the mobile station 20C including a reception device, and can improve the communication performance.

Fifth Embodiment, which is the claimed Embodiment.

A wireless communication system 5 according to the fifth embodiment of the present invention includes a mobile station 20D instead of the mobile station 20 in FIG. 1. In the wireless communication system 5, the mobile station 20D is configured to select, based on the magnitude of channel estimation values, either an interference signal generated using a channel coefficient and a known symbol sequence or an interference signal extracted by subtracting a target signal from a reception signal.

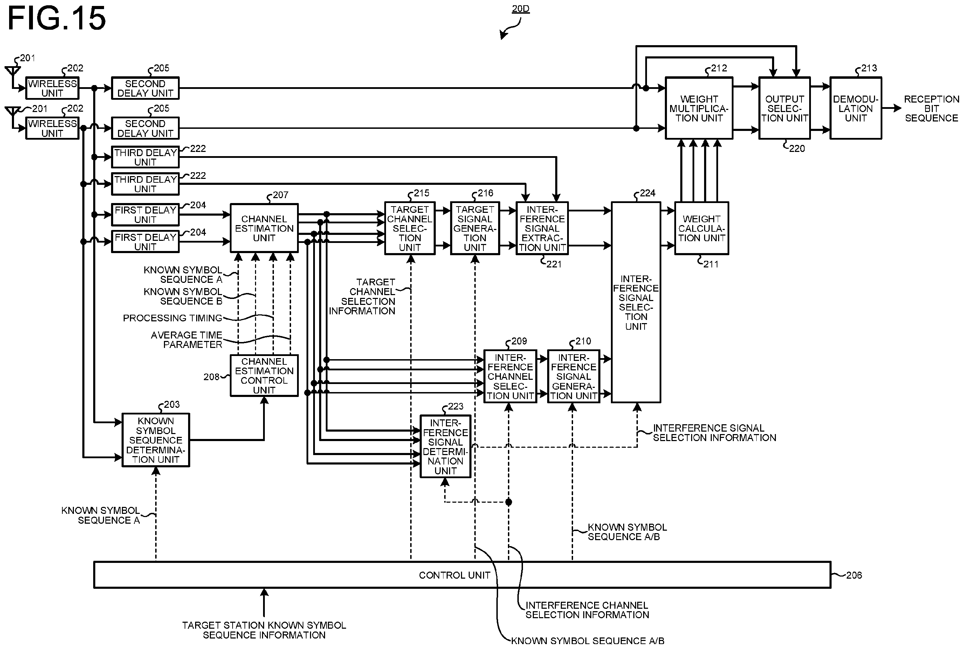

FIG. 15 is a diagram illustrating a configuration of the mobile station 20D according to the fifth embodiment of the present invention. The mobile station 20D includes the two antennas 201, the two wireless units 202 corresponding one-to-one to the two antennas 201, the known symbol sequence determination unit 203, the two first delay units 204, the two second delay units 205, the control unit 206, the channel estimation unit 207, and the channel estimation control unit 208. The mobile station 20D further includes the interference channel selection unit 209, the interference signal generation unit 210, the weight calculation unit 211, the weight multiplication unit 212, the demodulation unit 213, the target channel selection unit 215, the target signal generation unit 216, and the output selection unit 220. The mobile station 20D further includes the interference signal extraction unit 221, the two third delay units 222, an interference signal determination unit 223, and an interference signal selection unit 224.

Hereinafter, the description of parts similar to those of the mobile station 20 according to the first embodiment of the present invention will be omitted, and different parts will be mainly described. The control unit 206 outputs target channel selection information to the target channel selection unit 215, and outputs interference channel selection information to the interference signal determination unit 223.

The channel estimation unit 207 outputs channel estimation values not only to the interference channel selection unit 209 but also to the target channel selection unit 215 and the interference signal determination unit 223. The input and operation of the interference signal generation unit 210 are the same as those in the first embodiment. In the first embodiment, the output from the interference signal generation unit 210 is directed to the weight calculation unit 211. In contrast, in the fifth embodiment, the generated interference signal is output to the interference signal selection unit 224.

The input/output and operation of the target channel selection unit 215 are the same as those in the second embodiment. The input/output and operation of the target signal generation unit 216 are the same as those in the second embodiment. The input and operation of the interference signal extraction unit 221 are the same as those in the third embodiment. In the third embodiment, the output from the interference signal extraction unit 221 is directed to the weight calculation unit 211. In contrast, in the fifth embodiment, the extracted interference signal is output to the interference signal selection unit 224. The input/output and operation of the third delay unit 222 are the same as those in the third embodiment.

For the channel estimation values input from the channel estimation unit 207, the interference signal determination unit 223 calculates the average power of the channel estimation values for each base station 10, and identifies the average power of the channel estimation values for each of the interference signal and the target signal based on the interference channel selection information from the control unit 206. The interference signal determination unit 223 calculates the ratio of the average power of the channel estimation values for the interference signal to the average power of the channel estimation values for the target signal, generates interference signal selection information based on the calculation result, and outputs the generated interference signal selection information to the interference signal selection unit 224. Specifically, in a case where the average power of the channel estimation values for the target signal is larger than the average power of the channel estimation values for the interference signal by a threshold value or more, the interference signal determination unit 223 generates interference signal selection information for causing the interference signal selection unit 224 to select the output from the interference signal extraction unit 221.

The interference signal selection unit 224 selects, based on the interference signal selection information input from the interference signal determination unit 223, either the interference signal sequence that is a second interference signal input from the interference signal extraction unit 221 or the interference signal sequence that is a first interference signal input from the interference signal generation unit 210, and outputs the selected interference signal sequence to the weight calculation unit 211.

The output and operation of the weight calculation unit 211 are the same as those in the first embodiment. In the first embodiment, the input to the weight calculation unit 211 is the output from the interference signal generation unit 210. In the fifth embodiment, however, the input to the weight calculation unit 211 is the output from the interference signal selection unit 224.

As described above, in the wireless communication system 5 according to the fifth embodiment of the present invention, the mobile station 20D is configured to select, based on the magnitude of channel estimation values, either an interference signal generated using a channel estimation value and a known symbol sequence or an interference signal extracted by subtracting a target signal from a reception signal. Therefore, it is possible to improve the accuracy of interference signal extraction regardless of the magnitude of the interference signal, and to improve the interference removal performance.

Sixth Embodiment.

A wireless communication system 6 according to the sixth embodiment of the present invention includes a mobile station 20E instead of the mobile station 20 of the wireless communication system 1 illustrated in FIG. 1. In the wireless communication system 6, the mobile station 20E is configured to select, based on the magnitude of channel estimation values, either an interference signal generated using a channel coefficient and a known symbol sequence or an interference signal extracted by subtracting a target signal from a reception signal. Further, the mobile station 20E has a function of updating an average time parameter that is based on the moving speed of the mobile station 20E in accordance with the fluctuation in the moving speed.

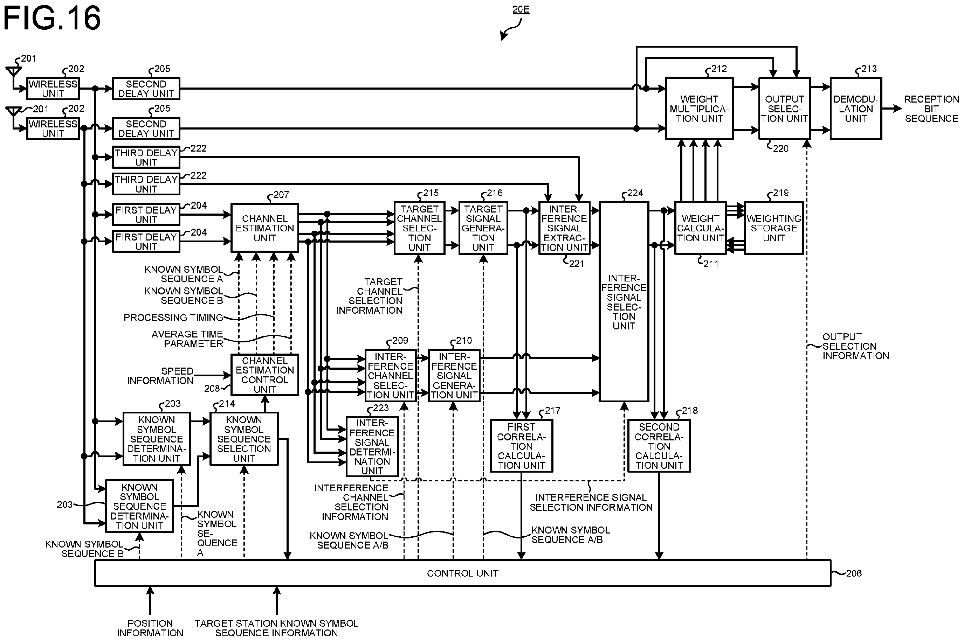

FIG. 16 is a diagram illustrating a configuration of the mobile station 20E according to the sixth embodiment of the present invention. The mobile station 20E includes the two antennas 201, the two wireless units 202 corresponding one-to-one to the two antennas 201, the two known symbol sequence determination units 203, the two first delay units 204, the two second delay units 205, the control unit 206, the channel estimation unit 207, and the channel estimation control unit 208. The mobile station 20E further includes the interference channel selection unit 209, the interference signal generation unit 210, the weight calculation unit 211, the weight multiplication unit 212, the demodulation unit 213, the known symbol sequence selection unit 214, the target channel selection unit 215, the target signal generation unit 216, the first correlation calculation unit 217, the second correlation calculation unit 218, the weighting storage unit 219, and the output selection unit 220. The mobile station 20E further includes the interference signal extraction unit 221, the two third delay units 222, the interference signal determination unit 223, and the interference signal selection unit 224.

Hereinafter, the description of parts similar to those of the mobile station 20D according to the fifth embodiment will be omitted, and differences from the mobile station 20D will be mainly described. In the fifth embodiment, the input to the control unit 206 is the target station known symbol sequence information. In contrast, in the sixth embodiment, in addition to the target station known symbol sequence information, the position information of the mobile station 20E is input from outside the mobile station 20E. The control unit 206 identifies the type of the known symbol sequence inserted into the target signal based on the target station known symbol sequence information or the position information. The control unit 206 may identify the type of the known symbol sequence inserted into the target signal based on the correlation values input from the plurality of known symbol sequence determination units 203. The control unit 206 generates target channel selection information indicating the identified type of the known symbol sequence, and outputs the generated target channel selection information to each of the target channel selection unit 215 and the known symbol sequence selection unit 214.

Further, the control unit 206 generates output selection information based on the correlation values input from the first correlation calculation unit 217 and the second correlation calculation unit 218, and outputs the generated output selection information to the output selection unit 220. For example, in a case where the correlation value input from the second correlation calculation unit 218 is larger than a threshold value, the control unit 206 generates output selection information for causing the output selection unit 220 to output the interference-removed reception symbol sequence. In a case where the correlation value input from the second correlation calculation unit 218 is equal to or smaller than the threshold value, the control unit 206 generates output selection information for causing the output selection unit 220 to output the interference-unremoved reception symbol sequence. In the above description, the correlation value input from the second correlation calculation unit 218 is compared with the threshold value, but the correlation value input from the first correlation calculation unit 217 may be used instead of the threshold value.

The control unit 206 outputs an average parameter to the weight calculation unit 211. The average parameter may be input from outside the mobile station 20E, or may be determined by the control unit 206 based on the moving speed. The channel estimation control unit 208 in the fifth embodiment uses the fixed average time parameter. In contrast, the channel estimation control unit 208 in the present embodiment adjusts the average time parameter in accordance with the fluctuation in the moving speed based on the speed information input from outside the mobile station 20E.

The input/output and operation of the known symbol sequence selection unit 214 are the same as those in the second embodiment. The input/output and operation of the first correlation calculation unit 217 are the same as those in the second embodiment. The output and operation of the second correlation calculation unit 218 are the same as those in the second embodiment. In the second embodiment, the input to the second correlation calculation unit 218 is the output from the interference signal generation unit 210. In contrast, in the sixth embodiment, the input to the second correlation calculation unit 218 is the output from the interference signal selection unit 224. The input/output and operation of the weighting storage unit 219 are the same as those in the second embodiment. The input/output and operation of the output selection unit 220 are the same as those in the second embodiment.

Seventh Embodiment.

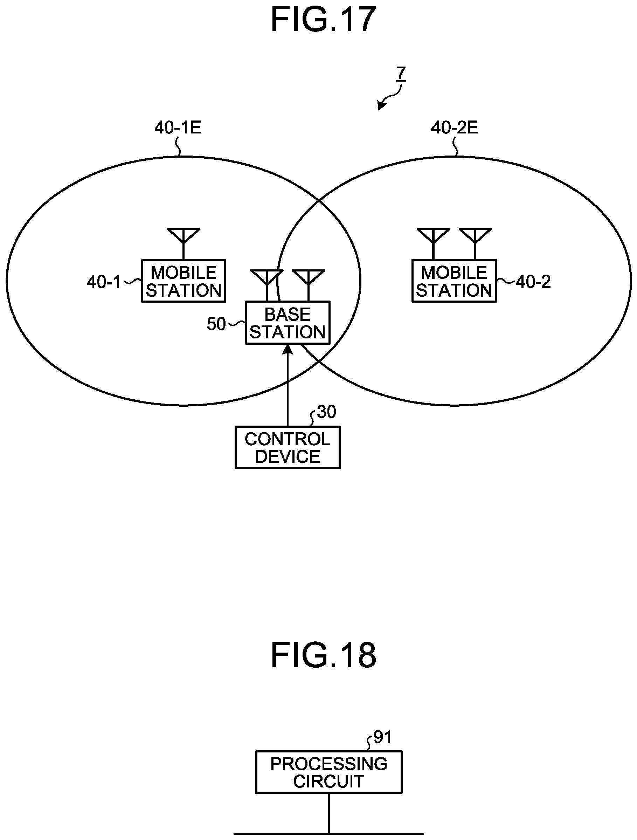

FIG. 17 is a diagram illustrating a configuration of a wireless communication system 7 according to the seventh embodiment of the present invention. The wireless communication system 7 includes a mobile station 40-1, a mobile station 40-2, a base station 50, and the control device 30. In the first to sixth embodiments, the base station 10 including a transmission device and the mobile station 20 including a reception device have been described. In the seventh embodiment, the mobile station 40-1 and mobile station 40-2 include transmission devices, and the base station 50 includes a reception device. Although FIG. 17 illustrates two mobile stations 40 and one base station 50, the number of these devices is not limited to this example.

The control device 30 controls the base station 50 and has the same function as in the first embodiment. The mobile station 40-1 forms a communication area 40-1E, and the mobile station 40-2 forms a communication area 40-2E. The transmission frequency of the mobile station 40-1 is the same as the transmission frequency of the mobile station 40-2. The communication area 40-1E of the mobile station 40-1 and the communication area 40-2E of the mobile station 40-2 partially overlap. Each of the mobile station 40-1 and the mobile station 40-2 transmits a transmission bit sequence using a wireless signal. The base station 50 receives information from the mobile station 40-1 or the mobile station 40-2.

Hereinafter, when it is not necessary to distinguish between the mobile station 40-1 and the mobile station 40-2, they are simply referred to as the mobile station 40. The mobile station 40-1 and the mobile station 40-2 each insert a known symbol sequence represented in complex notation into a transmission signal. Known symbol sequences inserted into transmission signals differ between the mobile stations 40. The format of transmission signals that the mobile station 40 transmits is the same as that of transmission signals illustrated in FIG. 2. In the example of FIG. 2, the data symbol included in the transmission signal from the mobile station 40-1 and the data symbol included in the transmission signal from the mobile station 40-2 differ. However, the data symbol included in the transmission signal from the mobile station 40-1 and the data symbol included in the transmission signal from the mobile station 40-2 may be the same.

In a case where the mobile station 40 and the base station 50 communicate bidirectionally, that is, in a case where each of the mobile station 40 and the base station 50 has both a transmission device and a reception device, the mobile station 40 may determine the known symbol sequence that is inserted into the transmission signal to be transmitted to the base station 50 based on the known symbol sequence inserted into the transmission signal from the base station 50. The mobile station 40 may insert the known symbol sequence inserted by the base station 50 as it is, or may process the known symbol sequence inserted by the base station 50 according to a predetermined rule and insert the processed known symbol sequence.

The mobile station 40 in the seventh embodiment can have the same configuration as the base stations 10, 10A, and 10B described in the first to sixth embodiments. However, because the control device 30 is not connected to the mobile station 40, a control unit is required that outputs a transmission bit sequence and control information for the mobile station 40 to the mobile station 40.

The base station 50 according to the seventh embodiment can have the same configuration as the mobile stations 20, 20A, 20B, 20C, 20D, and 20E described in the first to sixth embodiments. Note that the control in the control unit 206 and the function of the channel estimation control unit 208 in the first to sixth embodiments may be undertaken by the control device 30.

Further, each of the mobile station 40 and the base station 50 may be a transmission/reception device having both the configuration of the base stations 10, 10A, and 10B and the configuration of the mobile stations 20, 20A, 20B, 20C, 20D, and 20E described in the first to sixth embodiments.

Next, a hardware configuration for implementing the functions of the base stations 10, 10A, 10B, and 50 and the mobile stations 20, 20A, 20B, 20C, 20D, 20E, and 40 according to the first to seventh embodiments of the present invention will be described.

FIG. 18 is a diagram illustrating an example in which the processing circuit of the base stations 10, 10A, 10B, and 50 and the mobile stations 20, 20A, 20B, 20C, 20D, 20E, and 40 according to the first to seventh embodiments of the present invention is configured with dedicated hardware. In a case where the processing circuit is configured with dedicated hardware, the processing circuit 91 illustrated in FIG. 18 corresponds, for example, to a single circuit, a composite circuit, a programmed processor, a parallel programmed processor, an application specific integrated circuit (ASIC), a field programmable gate array (FPGA), or a combination thereof. The functions of the base stations 10, 10A, 10B, and 50 and the mobile stations 20, 20A, 20B, 20C, 20D, 20E, and 40 may be implemented by the processing circuit 91 separately or collectively.

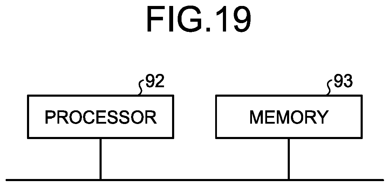

FIG. 19 is a diagram illustrating an example in which the processing circuit of the base stations 10, 10A, 10B, and 50 and the mobile stations 20, 20A, 20B, 20C, 20D, 20E, and 40 according to the first to seventh embodiments of the present invention is configured with a processor and a memory. In a case where the processing circuit is configured with the processor 92 and the memory 93 illustrated in FIG. 19, each function of the base stations 10, 10A, 10B, and 50 and the mobile stations 20, 20A, 20B, 20C, 20D, 20E, and 40 is implemented by software, firmware, or a combination of software and firmware. Software or firmware is described as computer programs and stored in the memory 93.

The processor 92 reads and executes the computer programs stored in the memory 93, thereby implementing each function. The processor 92 may be a central processing unit (CPU), a processing device, an arithmetic device, a microprocessor, a microcomputer, a digital signal processor (DSP), or the like. Examples of the memory 93 include a non-volatile or volatile semiconductor memory, a magnetic disk, a flexible disk, an optical disc, a compact disc, a mini disc, a digital versatile disc (DVD), and the like. Examples of non-volatile or volatile semiconductor memories include a random access memory (RAM), a read only memory (ROM), a flash memory, an erasable programmable ROM (EPROM), an electrically EPROM (EEPROM, registered trademark), and the like.

Note that the functions of the base stations 10, 10A, 10B, and 50 and the mobile stations 20, 20A, 20B, 20C, 20D, 20E, and 40 may be partially implemented by dedicated hardware, and partially implemented by software or firmware. In this manner, the processing circuit can implement the above-described functions using dedicated hardware, software, firmware, or a combination thereof.

The configurations described in the above-mentioned embodiments indicate examples of the contents of the present invention. The configurations can be combined with another well-known technique, and some of the configurations can be omitted or changed in a range not departing from the scope of the present invention which is defined by the appended claims.

For example, the base station 10 in FIG. 3 includes one antenna 104, but the present embodiment is not limited to this example. The base station 10 may include a plurality of antennas 104.

Reference Signs List

1, 1-1, 2, 3, 4, 5, 6, 7 wireless communication system; 10, 10-1, 10-2, 10-3, 10-4, 10-5, 10-6, 10-7, 10A, 10A-1, 10A-2, 10B, 10B-1, 10B-2, 50 base station; 20, 20A, 20B, 20C, 20D, 20E, 40, 40-1, 40-2 mobile station; 30 control device; 10-1E, 10-2E, 10-3E, 10-4E, 10-5E, 10-6E, 10-7E, 10A-1E, 10A-2E, 10B-1E, 10B-2E, 40-1E, 40-2E communication area; 91 processing circuit; 92 processor; 93 memory; 101 selection unit; 102 mapping unit; 103, 202 wireless unit; 104, 104a, 104b, 201 antenna; 105 differential coding unit; 106 differential space-time coding unit; 203 known symbol sequence determination unit; 204 first delay unit; 205 second delay unit; 206 control unit; 207 channel estimation unit; 208 channel estimation control unit; 209 interference channel selection unit; 210 interference signal generation unit; 211 weight calculation unit; 212 weight multiplication unit; 213 demodulation unit; 214 known symbol sequence selection unit; 215 target channel selection unit; 216 target signal generation unit; 217 first correlation calculation unit; 218 second correlation calculation unit; 219 weighting storage unit; 220 output selection unit; 221 interference signal extraction unit; 222 third delay unit; 223 interference signal determination unit; 224 interference signal selection unit.

**Claims**

1. A wireless communication system (1; 1-1; 2; 3; 4; 5; 6; 7) comprising:

   a plurality of transmission devices to transmit signals including different known sequences using a same frequency; and **characterized by**
a reception device provided in a moving object and including a plurality of antennas (201), wherein
the reception device is adapted to perform channel estimation using reception signals received by the plurality of antennas, at least one of a plurality of the known sequences corresponding to the plurality of transmission devices, and an average time parameter that is based on a moving speed of the moving object, the average time parameter being a parameter for determining a range of symbols to be subjected to the channel estimation; to generate an interference signal sequence using a result of the channel estimation as a channel coefficient corresponding to a central symbol in the range; to generate, using the interference signal sequence, a weight for removing the interference signal sequence; and to combine the reception signals received by the plurality of antennas using the weight;
wherein the reception device (20D; 20E) includes:

an interference signal generation unit (210) to generate the interference signal using a channel coefficient obtained as a result of the channel estimation and the known sequence inserted into the interference signal;
a target signal generation unit (216) to generate a target signal using a channel coefficient obtained as a result of the channel estimation and the known sequence inserted into the target signal;
an interference signal extraction unit (221) to extract the interference signal by subtracting the target signal from the reception signal; and
an interference signal selection unit (224) to select a first interference signal that is the interference signal generated by the interference signal generation unit (210) or a second interference signal that is the interference signal extracted by the interference signal extraction unit (221);
wherein the interference signal selection unit (224) selects the first interference signal or the second interference signal based on an average power of the channel coefficient.

2. The wireless communication system according to claim 1, wherein the reception device is further adapted to select whether to multiply the reception signal by the weight based on a correlation value for the interference signal sequence.

3. The wireless communication system (4; 5; 6) according to claim 2, wherein the reception device (20C; 20D; 20E) is further adapted to select whether to multiply the reception signal by the weight based on a correlation value for the interference signal sequence and a correlation value for a target signal extracted from the reception signal.

4. The wireless communication system (2; 4; 6) according to claim 1, wherein

the reception device (20A; 20C; 20E) includes a weighting storage unit (219) to temporarily store an intermediate value generated when the weight is calculated and the weight, and
the reception device (20A; 20C; 20E) is further adapted to calculate the weight using at least one of the intermediate value and the weight stored in the weighting storage unit (219).

5. The wireless communication system (7) according to any one of claims 1 to 4, wherein the reception device (50) is further adapted to calculate an average power of the channel coefficient of the target signal and an average power of the channel coefficient of the interference signal, to estimate a magnitude of an interference power, and to monitor the interference power.

6. The wireless communication system (1; 2; 3; 4; 5; 6) according to any one of claims 1 to 5, comprising:

a base station (10; 10A; 10B) including the transmission device; and
a mobile station (20; 20A; 20B; 20C; 20D; 20E) that is a moving object.

7. The wireless communication system (7) according to claim 6, wherein the mobile station (40-1, 40-2) is adapted to determine a known sequence to be inserted into a transmission signal from the mobile station (40-1, 40-2) based on a type of a known sequence inserted into a reception signal from the base station (50).

8. The wireless communication system (5; 6) according to any one of claims 1 to 7,
wherein the average time parameter being a parameter related to channel estimation accuracy and determined based on a moving speed of a moving one of the reception device (20D; 20E) that receives the reception signal and the transmission devices (10-1, 10-2) that have transmitted the reception signal.

9. A wireless communication method for a wireless system (1; 2; 3; 4; 5; 6; 7) including: a plurality of transmission devices to transmit signals including different known sequences using a same frequency, and **characterized by** further including a reception device provided in a moving object and including a plurality of antennas (201), the method comprising:

a step (a) of transmitting, by the plurality of transmission devices, signals into which known sequences that differ between the transmission devices have been inserted;

a step (b) of performing, by the reception device, channel estimation using reception signals received by the plurality of antennas, at least one of the plurality of known sequences corresponding to the plurality of transmission devices, and an average time parameter that is based on a moving speed of the moving object, the average time parameter being a parameter for determining a range of symbols to be subjected to the channel estimation; and

a step (c), by the reception device, of generating an interference signal sequence using a result of the channel estimation as a channel coefficient corresponding to a central symbol in the range, generating, using the interference signal sequence, a weight for removing the interference signal sequence, and combining the reception signals received by the plurality of antennas using the weight;

a step (d), by the reception device, of generating the interference signal using a channel coefficient obtained as a result of the channel estimation and the known sequence inserted into the interference signal;

a step (e), by the reception device, of generating a target signal using a channel coefficient obtained as a result of the channel estimation and the known sequence inserted into the target signal;

a step (f), by the reception device, of extracting the interference signal by subtracting the target signal from the reception signal; and

a step (g), by the reception device, of selecting a first interference signal that is the interference signal generated by the step (d) or a second interference signal that is the interference signal extracted by the step (f); and a step (h) of selecting the first interference signal or the second interference signal based on an average power of the channel coefficient.

10. A computer readable storage medium (93) which stores a program for controlling a reception device which is included in a wireless communication system comprising: a plurality of transmission devices to transmit signals including different known sequences using a same frequency; and the reception device provided in a moving object and including a plurality of antennas, wherein

the program causes, when executed, a processor (92) to execute the steps b to g of the method according to claim 9.


**Patentansprüche**

1. Drahtlos-Kommunikationssystem (1; 1-1; 2; 3; 4; 5; 6; 7), umfassend:

eine Vielzahl von Übertragungseinrichtungen, um Signale, enthaltend verschiedene bekannte Abfolgen, unter Verwendung einer gleichen Frequenz zu übertragen; und **gekennzeichnet durch**

eine Empfangseinrichtung, die in einem sich bewegenden Objekt vorgesehen ist und eine Vielzahl von Antennen (201) enthält, wobei

die Empfangseinrichtung ausgelegt ist, Kanalermittlung unter Verwendung von Empfangssignalen, die von der Vielzahl von Antennen empfangen werden, wobei zumindest eine aus einer Vielzahl der bekannten Abfolgen der Vielzahl von Übertragungseinrichtungen entspricht, und eines Durchschnittszeitparameters, der auf einer Bewegungsgeschwindigkeit des sich bewegenden Objekts basiert, durchzuführen, wobei der Durchschnittszeitparameter ein Parameter zum Bestimmen eines Bereichs von Symbolen ist, die der Kanalermittlung zu unterziehen sind; eine Interferenzsignalabfolge unter Verwendung eines Ergebnisses der Kanalermittlung als einen Kanalkoeffizient, der einem zentralen Symbol in dem Bereich entspricht, zu erzeugen; unter Verwendung der Interferenzsignalabfolge eine Gewichtung zum Entfernen der Interferenzsignalabfolge zu erzeugen; und die von der Vielzahl der Antennen empfangenen Empfangssignale unter Verwendung der Gewichtung zu kombinieren;

wobei die Empfangseinrichtung (20D; 20E) umfasst:

eine Interferenzsignal-Erzeugungseinheit (210), um das Interferenzsignal unter Verwendung eines Kanalkoeffizienten, der als ein Ergebnis der Kanalermittlung erhalten wird, und der in das Interferenzsignal eingefügten bekannten Abfolge zu erzeugen;

eine Zielsignal-Erzeugungseinheit (216), um ein Zielsignal unter Verwendung eines Kanalkoeffizienten, der als ein Ergebnis der Kanalermittlung erhalten wurde, und der in das Zielsignal eingefügten bekannten Abfolge, zu erzeugen;

eine Interferenzsignal-Extrahierungseinheit (221), um das Interferenzsignal durch Subtrahieren des Zielsignals vom Empfangssignal zu extrahieren; und

eine Interferenzsignal-Auswahleinheit (224), um ein erstes Interferenzsignal, das das durch die Interferenzsignal-Erzeugungseinheit (210) erzeugte Interferenzsignal ist, oder eines zweiten Interferenzsignals, das das durch die Interferenzsignal-Extrahierungseinheit (221) extrahierte Interferenzsignal ist, auszuwählen; wobei die Interferenzsignal-Auswahleinheit (224) das erste Interferenzsignal oder das zweite Interferenzsignal auf Grundlage einer durchschnittlichen Leistung des Kanalkoeffizienten auswählt.

2.  Drahtlos-Kommunikationssystem nach Anspruch 1, wobei die Empfangseinrichtung ferner ausgelegt ist, auszuwählen, ob das Empfangssignal mit der Gewichtung zu multiplizieren ist, auf Grundlage eines Korrelationswertes für die Interferenzsignalabfolge.

3.  Drahtlos-Kommunikationssystem (4; 5; 6) nach Anspruch 2, wobei die Empfangseinrichtung (20C; 20D; 20E) ferner ausgelegt ist, auszuwählen, ob das Empfangssignal mit der Gewichtung zu multiplizieren ist, auf Grundlage eines Korrelationswerts für die Interferenzsignalabfolge und eines Korrelationswerts für ein aus dem Empfangssignal extrahiertes Zielsignal.

4.  Drahtlos-Kommunikationssystem (2; 4; 6) nach Anspruch 1, wobei:

die Empfangseinrichtung (20A; 20C; 20E) eine Gewichtungsspeichereinheit (219) enthält, um einen bei der Berechnung der Gewichtung erzeugten Zwischenwert und die Gewichtung vorübergehend zu speichern, und die Empfangseinrichtung (20A; 20C; 20E) ferner ausgelegt ist, die Gewichtung unter Verwendung zumindest eines von dem Zwischenwert und der Gewichtung, die in der Gewichtungsspeichereinheit (219) gespeichert sind, zu berechnen.

5.  Drahtlos-Kommunikationssystem (7) nach einem der Ansprüche 1 bis 4, wobei die Empfangseinrichtung (50) ferner ausgelegt ist, eine durchschnittliche Leistung des Kanalkoeffizienten des Zielsignals und eine durchschnittliche Leistung des Kanalkoeffizienten des Interferenzsignals zu berechnen, eine Größe einer Interferenzleistung zu ermitteln und die Interferenzleistung zu überwachen.

6.  Drahtlos-Kommunikationssystem (1; 2; 3; 4; 5; 6) nach einem der Ansprüche 1 bis 5, umfassend:

eine Basisstation (10; 10A; 10B), die die Übertragungseinrichtung enthält; und eine mobile Station (20; 20A; 20B; 20C; 20D; 20E), die ein sich bewegendes Objekt ist.

7.  Drahtlos-Kommunikationssystem (7) nach Anspruch 6, wobei die mobile Station (40-1, 40-2) ausgelegt ist, eine bekannte Abfolge, die in ein Übertragungssignal von der mobilen Station (40-1, 40-2) einzufügen ist, zu bestimmen auf Grundlage eines Typs einer bekannten Abfolge, die in ein Empfangssignal von der Basisstation (50) eingefügt ist.

8.  Drahtlos-Kommunikationssystem (5; 6) nach einem der Ansprüche 1 bis 7, wobei der Durchschnittszeitparameter ein Parameter ist, der sich auf Kanalermittlungsgenauigkeit bezieht und bestimmt wird auf Grundlage einer Bewegungsgeschwindigkeit einer sich bewegenden von der Empfangseinrichtung (20D; 20E), die das Empfangssignal empfängt, und der Übertragungseinrichtungen (10-1, 10-2), die das Empfangssignal übertragen haben.

9.  Drahtlos-Kommunikationsverfahren für ein Drahtlos-System (1; 2; 3; 4; 5; 6; 7), umfassend: eine Vielzahl von Übertragungseinrichtungen, um Signale, die verschiedene bekannte Abfolgen enthalten, unter Verwendung einer gleichen Frequenz zu übertragen, und **gekennzeichnet durch** ferner umfassend eine Empfangseinrichtung, die in einem sich bewegenden Objekt vorgesehen ist und eine Vielzahl von Antennen (201) enthält, wobei das Verfahren umfasst:

einen Schritt (a) des Übertragens, durch die Vielzahl von Übertragungseinrichtungen, von Signalen, in die zwischen den Übertragungseinrichtungen unterschiedliche bekannte Abfolgen eingefügt wurden; einen Schritt (b) des Durchführens, durch die Empfangseinrichtung, von Kanalermittlung unter Verwendung von Empfangssignalen, die durch die Vielzahl von Antennen empfangen wurden, wobei zumindest eine der Vielzahl von bekannten Abfolgen der Vielzahl von Übertragungseinrichtungen entspricht, und eines Durchschnittszeitparameters, der auf einer Bewegungsgeschwindigkeit des sich bewegenden Objekts basiert, wobei der Durchschnittszeitparameter ein Parameter ist zum Bestimmen eines Bereichs von Symbolen, die der Kanalermittlung zu unterziehen sind; und

einen Schritt (c), durch die Empfangseinrichtung, des Erzeugens einer Interferenzsignalabfolge unter Verwendung eines Ergebnisses der Kanalermittlung als einen Kanalkoeffizienten, der einem zentralen Symbol in dem Bereich entspricht, Erzeugens, unter Verwendung der Interferenzsignalabfolge, einer Gewichtung zum Entfernen der Interferenzsignalabfolge, und Kombinierens der Empfangssignale, die von der Vielzahl von Antennen empfangen wurden, unter Verwendung der Gewichtung;

einen Schritt (d), durch die Empfangseinrichtung, des Erzeugens des Interferenzsignals unter Verwendung eines Kanalkoeffizienten, der als ein Ergebnis der Kanalermittlung erhalten wurde, und der in das Interferenzsignal eingefügten bekannten Abfolge;

einen Schritt (e), durch die Empfangseinrichtung, des Erzeugens eines Zielsignals unter Verwendung eines Kanalkoeffizienten, der als ein Ergebnis der Kanalermittlung erhalten wurde, und der bekannten Abfolge, die in das Zielsignal eingefügt ist;

einen Schritt (f), durch die Empfangseinrichtung, des Extrahierens des Interferenzsignals durch Subtrahieren des Zielsignals von dem Empfangssignal; und

einen Schritt (g), durch die Empfangseinrichtung, des Auswählens eines ersten Interferenzsignals, das das durch Schritt (d) erzeugte Interferenzsignal ist, oder eines zweiten Interferenzsignals, das das durch Schritt (f) extrahierte Interferenzsignal ist; und einen Schritt (h) des Auswählens des ersten Interferenzsignals oder des zweiten Interferenzsignals auf Grundlage einer durchschnittlichen Leistung des Kanalkoeffizienten.

10. Computerlesbares Speichermedium (93), das ein Programm zum Steuern einer Empfangseinrichtung speichert, die in einem Drahtlos-Kommunikationssystem enthalten ist, umfassend: eine Vielzahl von Übertragungseinrichtungen, um Signale, enthaltend verschiedene bekannte Abfolgen, unter Verwendung einer gleichen Frequenz zu übertragen; und die Empfangseinrichtung, die in einem sich bewegenden Objekt vorgesehen ist und eine Vielzahl von Antennen enthält, wobei

das Programm bei Ausführung einen Prozessor (92) veranlasst, die Schritte b bis g des Verfahrens nach Anspruch 9 auszuführen.

## Revendications

1. Système de communication sans fil (1 ; 1-1 ; 2 ; 3 ; 4 ; 5 ; 6 ; 7) comprenant :

une pluralité de dispositifs de transmission pour transmettre des signaux comprenant différentes séquences connues en utilisant une même fréquence ; et **caractérisé par**

un dispositif de réception prévu dans un objet mobile et incluant une pluralité d'antennes (201), dans lequel le dispositif de réception est adapté pour effectuer une estimation de canal en utilisant des signaux de réception reçus par la pluralité d'antennes, au moins une d'une pluralité des séquences connues correspondant à la pluralité de dispositifs de transmission, et un paramètre de temps moyen qui est basé sur une vitesse de déplacement de l'objet mobile, le paramètre de temps moyen étant un paramètre pour déterminer une gamme de symboles à soumettre à l'estimation de canal ; pour générer une séquence de signaux d'interférence en utilisant un résultat de l'estimation de canal comme coefficient de canal correspondant à un symbole central dans la plage ; pour générer, en utilisant la séquence de signaux d'interférence, un poids pour supprimer la séquence de signaux d'interférence ; et pour combiner les signaux de réception reçus par la pluralité d'antennes en utilisant le poids ;

dans lequel le dispositif de réception (20D ; 20E) inclut :

une unité de génération de signal d'interférence (210) pour générer le signal d'interférence en utilisant un coefficient de canal obtenu comme résultat de l'estimation de canal et la séquence connue insérée dans le signal d'interférence ;

une unité de génération de signal cible (216) pour générer un signal cible en utilisant un coefficient de canal obtenu comme résultat de l'estimation de canal et la séquence connue insérée dans le signal cible ;

une unité d'extraction de signal d'interférence (221) pour extraire le signal d'interférence en soustrayant le signal cible du signal de réception ; et

une unité de sélection de signal d'interférence (224) pour sélectionner un premier signal d'interférence qui est le signal d'interférence généré par l'unité de génération de signal d'interférence (210) ou un second signal d'interférence qui est le signal d'interférence extrait par l'unité d'extraction de signal d'interférence (221) ;
dans lequel l'unité de sélection de signal d'interférence (224) sélectionne le premier signal d'interférence ou le second signal d'interférence sur la base d'une puissance moyenne du coefficient de canal.

2. Système de communication sans fil selon la revendication 1, dans lequel le dispositif de réception est en outre adapté pour sélectionner s'il faut multiplier le signal de réception par le poids sur la base d'une valeur de corrélation pour la séquence de signaux d'interférence.

3. Système de communication sans fil (4 ; 5 ; 6) selon la revendication 2, dans lequel le dispositif de réception (20C ; 20D ; 20E) est en outre adapté pour sélectionner s'il faut multiplier le signal de réception par le poids sur la base d'une valeur de corrélation pour la séquence de signaux d'interférence et d'une valeur de corrélation pour un signal cible extrait du signal de réception.

4. Système de communication sans fil (2, 4, 6) selon la revendication 1, dans lequel

le dispositif de réception (20A ; 20C ; 20E) inclut une unité de stockage de pondération (219) pour stocker temporairement une valeur intermédiaire générée lorsque le poids est calculé et le poids, et
le dispositif de réception (20A ; 20C ; 20E) est en outre adapté pour calculer le poids en utilisant au moins l'une de la valeur intermédiaire et du poids stocké dans l'unité de stockage de pondération (219).

5. Système de communication sans fil (7) selon l'une quelconque des revendications 1 à 4, dans lequel le dispositif de réception (50) est en outre adapté pour calculer une puissance moyenne du coefficient de canal du signal cible et une puissance moyenne du coefficient de canal du signal d'interférence, pour estimer une amplitude d'une puissance d'interférence, et pour surveiller la puissance d'interférence.

6. Système de communication sans fil (1 ; 2 ; 3 ; 4 ; 5 ; 6) selon l'une quelconque des revendications 1 à 5, comprenant :

une station de base (10 ; 10A ; 10B) incluant le dispositif de transmission ; et
une station mobile (20 ; 20A ; 20B ; 20C ; 20D ; 20E) qui est un objet mobile.

7. Système de communication sans fil (7) selon la revendication 6, dans lequel la station mobile (40-1, 40-2) est adaptée pour déterminer une séquence connue à insérer dans un signal de transmission provenant de la station mobile (40-1, 40-2) sur la base d'un type de séquence connue insérée dans un signal de réception provenant de la station de base (50).

8. Système de communication sans fil (5, 6) selon l'une quelconque des revendications 1 à 7,
dans lequel le paramètre de temps moyen est un paramètre lié à la précision d'estimation de canal et déterminé sur la base d'une vitesse de déplacement d'un dispositif mobile parmi le dispositif de réception (20D ; 20E) qui reçoit le signal de réception et les dispositifs de transmission (10-1, 10-2) qui ont transmis le signal de réception.

9. Procédé de communication sans fil pour un système sans fil (1 ; 2 ; 3 ; 4 ; 5 ; 6 ; 7) comprenant : une pluralité de dispositifs de transmission pour transmettre des signaux comprenant différentes séquences connues en utilisant une même fréquence, et **caractérisé en ce qu'**il comprend en outre un dispositif de réception prévu dans un objet mobile et comprenant une pluralité d'antennes (201), le procédé comprenant :

une étape (a) de transmission, par la pluralité de dispositifs de transmission, de signaux dans lesquels des séquences connues qui diffèrent entre les dispositifs de transmission ont été insérées ;
une étape (b) consistant à effectuer, par le dispositif de réception, une estimation de canal en utilisant des signaux de réception reçus par la pluralité d'antennes, au moins une de la pluralité de séquences connues correspondant à la pluralité de dispositifs de transmission, et un paramètre de temps moyen qui est basé sur une vitesse de déplacement de l'objet mobile, le paramètre de temps moyen étant un paramètre pour déterminer une plage de symboles à soumettre à l'estimation de canal ; et
une étape (c), par le dispositif de réception, consistant à générer une séquence de signaux d'interférence en utilisant un résultat de l'estimation de canal comme coefficient de canal correspondant à un symbole central dans la gamme, à générer, en utilisant la séquence de signaux d'interférence, un poids pour supprimer la séquence de signaux d'interférence, et à combiner les signaux de réception reçus par la pluralité d'antennes en utilisant le poids ;
une étape (d), par le dispositif de réception, consistant à générer le signal d'interférence en utilisant un coefficient de canal obtenu comme résultat de l'estimation de canal et la séquence connue insérée dans le signal d'interférence ;

une étape (e), par le dispositif de réception, consistant à générer un signal cible en utilisant un coefficient de canal obtenu comme résultat de l'estimation de canal et la séquence connue insérée dans le signal cible ;

une étape (f), par le dispositif de réception, consistant à extraire le signal d'interférence en soustrayant le signal cible du signal de réception ; et

une étape (g), par le dispositif de réception, consistant à sélectionner un premier signal d'interférence qui est le signal d'interférence généré par l'étape (d) ou un second signal d'interférence qui est le signal d'interférence extrait par l'étape (f) ; et une étape (h) consistant à sélectionner le premier signal d'interférence ou le second signal d'interférence sur la base d'une puissance moyenne du coefficient de canal.

10. Support de stockage lisible par ordinateur (93) qui stocke un programme pour commander un dispositif de réception qui est inclus dans un système de communication sans fil comprenant : une pluralité de dispositifs de transmission pour transmettre des signaux comprenant différentes séquences connues en utilisant une même fréquence ; et le dispositif de réception prévu dans un objet mobile et comprenant une pluralité d'antennes, où

le programme amène, lorsqu'il est exécuté, un processeur (92) à exécuter les étapes b à g du procédé selon la revendication 9.

# FIG.1

# FIG.2

# FIG.3

# FIG.4

# FIG.5

20

RECEPTION BIT SEQUENCE

DEMODULA-TION UNIT — 213

WEIGHT MULTIPLICATION UNIT — 212

WEIGHT CALCULA-TION UNIT — 211

INTER-FERENCE SIGNAL GENERA-TION UNIT — 210

INTER-FERENCE CHANNEL SELECTION UNIT — 209

CHANNEL ESTIMATION UNIT — 207

SECOND DELAY UNIT — 205

SECOND DELAY UNIT — 205

FIRST DELAY UNIT — 204

FIRST DELAY UNIT — 204

WIRELESS UNIT — 202

WIRELESS UNIT — 202

201

201

KNOWN SYMBOL SEQUENCE DETERMINATION UNIT — 203

CHANNEL ESTIMATION CONTROL UNIT — 208

CONTROL UNIT — 206

KNOWN SYMBOL SEQUENCE A/B

INTERFERENCE CHANNEL SELECTION INFORMATION

AVERAGE TIME PARAMETER

PROCESSING TIMING

KNOWN SYMBOL SEQUENCE A

KNOWN SYMBOL SEQUENCE B

KNOWN SYMBOL SEQUENCE A/B

TARGET STATION KNOWN SYMBOL SEQUENCE INFORMATION

# FIG.6

_1-1_

SAME FREQUENCY    SAME FREQUENCY

10-3E    10-4E    10-5E    10-6E    10-7E

BASE STATION    BASE STATION    BASE STATION    BASE STATION    BASE STATION

10-3    10-4    10-5    10-6    10-7

MOBILE STATION

20

CONTROL DEVICE

30

EP 3 742 691 B1

# FIG.7

# FIG.8

FIG.9

20A

201 WIRELESS UNIT 202
201 WIRELESS UNIT 202

205 SECOND DELAY UNIT
205 SECOND DELAY UNIT

204 FIRST DELAY UNIT
204 FIRST DELAY UNIT

207 CHANNEL ESTIMATION UNIT

KNOWN SYMBOL SEQUENCE A
KNOWN SYMBOL SEQUENCE B
PROCESSING TIMING
AVERAGE TIME PARAMETER
SPEED INFORMATION

208 CHANNEL ESTIMATION CONTROL UNIT

209 INTER-FERENCE CHANNEL SELEC-TION UNIT
INTER-FERENCE CHANNEL SELECTION INFORMATION

210 INTER-FERENCE SIGNAL GENERA-TION UNIT

211 WEIGHT CALCULA-TION UNIT
219 WEIGHTING STORAGE UNIT

212 WEIGHT MULTIPLICA-TION UNIT

220 OUTPUT SELEC-TION UNIT

213 DEMODU-LATION UNIT

RECEPTION BIT SEQUENCE

OUTPUT SELECTION INFORMATION
AVERAGE PARAMETER

218 SECOND CORRELA-TION CALCULA-TION UNIT

217 FIRST CORRELA-TION CALCULA-TION UNIT

216 TARGET SIGNAL GENERA-TION UNIT

215 TARGET CHANNEL SELEC-TION UNIT
TARGET CHANNEL SELECTION INFORMATION

KNOWN SYMBOL SEQUENCE A/B

214 KNOWN SYMBOL SEQUENCE SELECTION UNIT

203 KNOWN SYMBOL SEQUENCE DETERMINA-TION UNIT
203 KNOWN SYMBOL SEQUENCE DETERMINA-TION UNIT

KNOWN SYMBOL SEQUENCE A
KNOWN SYMBOL SEQUENCE B

206 CONTROL UNIT

POSITION INFORMATION
TARGET STATION KNOWN SYMBOL SEQUENCE INFORMATION

# FIG.10

# FIG.11

# FIG.12

10B

| TRANSMISSION BIT SEQUENCE → | 101 SELEC-TION UNIT | 102 MAPPING UNIT | 106 DIFFEREN-TIAL SPACE-TIME CODING UNIT | 103 WIRELESS UNIT | 104a |
| KNOWN BIT SEQUENCE → | | | | 103 WIRELESS UNIT | 104b |
| BIT SELECTION INFORMATION → | | | | | |

INITIAL VALUE

INITIALIZATION TIMING

FIG.13

# FIG.14

EP 3 742 691 B1

# FIG.15

FIG.15

20D

WIRELESS UNIT 202
201

SECOND DELAY UNIT 205

THIRD DELAY UNIT 222

FIRST DELAY UNIT 204

CHANNEL ESTIMATION UNIT 207

KNOWN SYMBOL SEQUENCE A
KNOWN SYMBOL SEQUENCE B
PROCESSING TIMING
AVERAGE TIME PARAMETER

CHANNEL ESTIMATION CONTROL UNIT 208

KNOWN SYMBOL SEQUENCE DETERMINATION UNIT 203

TARGET CHANNEL SELECTION UNIT 215

TARGET SIGNAL GENERATION UNIT 216

INTERFERENCE SIGNAL EXTRACTION UNIT 221

TARGET CHANNEL SELECTION INFORMATION

INTERFERENCE CHANNEL SELECTION UNIT 209

INTERFERENCE SIGNAL GENERATION UNIT 210

INTERFERENCE SIGNAL SELECTION UNIT 224

INTERFERENCE SIGNAL DETERMINATION UNIT 223

WEIGHT MULTIPLICATION UNIT 212

OUTPUT SELECTION UNIT 220

DEMODULATION UNIT 213

RECEPTION BIT SEQUENCE

WEIGHT CALCULATION UNIT 211

INTERFERENCE SIGNAL SELECTION INFORMATION

KNOWN SYMBOL SEQUENCE A/B

KNOWN SYMBOL SEQUENCE A

CONTROL UNIT 206

TARGET STATION KNOWN SYMBOL SEQUENCE INFORMATION

KNOWN SYMBOL SEQUENCE A/B

INTERFERENCE CHANNEL SELECTION INFORMATION

EP 3 742 691 B1

37

FIG.16

20E

RECEPTION BIT SEQUENCE

# FIG.17

# FIG.18

# FIG.19

**EP 3 742 691 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2634923 A1

- JP 6166641 B